(19) Europäisches Patentamt
European Patent Office
Office européen des brevets

(11) **EP 4 492 791 A1**

(12) **EUROPEAN PATENT APPLICATION**
published in accordance with Art. 153(4) EPC

(43) Date of publication:
**15.01.2025 Bulletin 2025/03**

(51) International Patent Classification (IPC):
**H04N 19/597** (2014.01)

(21) Application number: **22940768.9**

(52) Cooperative Patent Classification (CPC):
**H04N 19/13; H04N 19/147; H04N 19/18;
H04N 19/423; H04N 19/597; H04N 19/91**

(22) Date of filing: **09.12.2022**

(86) International application number:
**PCT/CN2022/137750**

(87) International publication number:
**WO 2023/213074 (09.11.2023 Gazette 2023/45)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.05.2022 CN 202210488291**

(71) Applicant: **Tencent Technology (Shenzhen)
Company Limited
Shenzhen, Guangdong, 518057 (CN)**

(72) Inventor: **ZHU, Wenjie
Shenzhen, Guangdong 518057 (CN)**

(74) Representative: **Nederlandsch Octrooibureau
P.O. Box 29720
2502 LS The Hague (NL)**

(54) **POINT CLOUD PROCESSING METHOD AND APPARATUS, DEVICE, STORAGE MEDIUM, AND PRODUCT**

(57) A point cloud processing method, executed by a computer device, and comprising: setting a limit parameter of a point cloud, the limit parameter comprising one or both of a cache limit parameter and a delay limit parameter(S301); acquiring attribute information of a point to be encoded in the point cloud (S302); and encoding the attribute information of the point to be encoded, and controlling the encoding process according to the limit parameter (S303).

```
┌──────────────────────────────────────────────────────────────┐
│ Set a limit parameter of a point cloud, the limit parameter    │ ── S301
│ including at least one of a cache limit parameter or a delay    │
│ limit parameter                                                 │
└──────────────────────────────────────────────────────────────┘
                              │
                              ▼
┌──────────────────────────────────────────────────────────────┐
│ Obtain attribute information of a first point of the point cloud│ ── S302
└──────────────────────────────────────────────────────────────┘
                              │
                              ▼
┌──────────────────────────────────────────────────────────────┐
│ Code the attribute information of the first point, and control  │ ── S303
│ the coding according to the limit parameter                     │
└──────────────────────────────────────────────────────────────┘
```

FIG. 3

**Description**

RELATED APPLICATION

This disclosure claims priority to Chinese Patent Application No. 2022104882918, entitled "POINT CLOUD PROCESSING METHOD AND APPARATUS, DEVICE, STORAGE MEDIUM, AND PRODUCT" filed with the State Intellectual Property Office on May 6, 2022.

FIELD OF THE TECHNOLOGY

This disclosure relates to the field of computer technologies, specifically to the field of coding and decoding technologies, and in particular, to a point cloud processing method, a point cloud processing apparatus, a computer device, a computer-readable storage medium, and a point cloud processing product.

BACKGROUND OF THE DISCLOSURE

With the continuous development of science and technologies, a large number of high-precision point clouds may be obtained at a low cost and in a short time period. The point cloud may include multiple points. Each point in the point cloud may have geometry information and attribute information. To improve the transmission efficiency of point clouds, however, the point clouds may be coded before transmission. After a coding endpoint codes geometry information and attribute information of each point in the point cloud, the coded point cloud may be transmitted to a decoding endpoint, and the decoding endpoint may decode the coded point cloud to reconstruct geometry information and attribute information of each point in the point cloud. Because the coding process may organize and process the attribute information of each point, the waiting time for coding the attribute information of each point in the point cloud may be long and the coding performance may be low.

SUMMARY

According to embodiments of this disclosure, a point cloud processing method and apparatus, a device, a storage medium, and a product are provided.

According to an aspect, some embodiments provides a point cloud processing method, executable by a computer device. The point cloud processing method includes:

setting a limit parameter of a point cloud, the limit parameter comprising at least one of a cache limit parameter or a delay limit parameter;

obtaining attribute information of a first point of the point cloud;

coding the attribute information of the first point; and

controlling the coding according to the limit parameter.

According to an aspect, some embodiments provides another point cloud processing method, executable by a computer device. The point cloud processing method includes:

obtaining a coded code stream of a first point of a point cloud;

obtaining a limit parameter of a point cloud, the limit parameter comprising at least one of a cache limit parameter or a delay limit parameter;

decoding the coded code stream of the first point; and

controlling the decoding according to the limit parameter.

According to an aspect, some embodiments provides a point cloud processing apparatus. The point cloud processing apparatus includes:

a setting unit, configured to set a limit parameter of a point cloud, the limit parameter comprising at least one of a cache limit parameter or a delay limit parameter;

an obtaining unit, configured to obtain attribute information of a first point of the point cloud; and

a processing unit, configured to code the attribute information of the first point; and control the coding according to the limit parameter.

37. A point cloud processing apparatus, comprising:

an obtaining unit, configured to obtain a coded code stream of a first point of a point cloud, and obtain a limit parameter of the point cloud, the limit parameter comprising at least one of a cache limit parameter or a delay limit parameter; and

a processing unit, configured to decode the coded code stream of the first point; and control the decoding according to the limit parameter.

According to an aspect, some embodiments provides another point cloud processing apparatus. The point cloud processing apparatus includes:

an obtaining unit, configured to obtain a coded code stream of a first point of a point cloud, and obtain a limit parameter of the point cloud, the limit parameter comprising at least one of a cache limit parameter or a delay limit parameter; and

a processing unit, configured to decode the coded code stream of the first point; and control the decoding according to the limit parameter.

Correspondingly, some embodiments provides a computer device, including a processor and a computer-readable storage medium. The processor is configured to implement computer-readable instructions, the computer-readable storage medium stores the computer-readable instructions, and the computer-readable instructions are loaded and executed by the processor to perform the above point cloud processing method.

Correspondingly, some embodiments provides a computer-readable storage medium storing computer-readable instructions, when the computer-readable instructions are read and executed by a processor of a computer device, the computer device being caused to perform the above point cloud processing method.

Correspondingly, some embodiments provides a computer program product, including computer-readable instructions stored in a computer-readable storage medium. A processor of a computer device reads the computer-readable instructions from the computer-readable storage medium, and the processor executes the computer-readable instructions, so that the computer device performs the above point cloud processing method.

Details of one or more embodiments of this disclosure are provided in the accompanying drawings and descriptions below. Other characteristics, objectives, and advantages of this disclosure become apparent from the specification, the drawings, and the claims.

BRIEF DESCRIPTION OF THE DRAWINGS

To describe the technical solutions in some embodiments or in the prior art more clearly, the following briefly introduces the accompanying drawings for describing the embodiments or the prior art. Apparently, the accompanying drawings in the following description show merely some embodiments of this disclosure, and a person of ordinary skill in the art may still derive other drawings from the accompanying drawings without creative efforts.

FIG. 1a is a schematic diagram of a coding framework according to some embodiments;

FIG. 1b is a schematic diagram of a neighbor relationship between a block of a current point and a parent block thereof according to some embodiments;

FIG. 2 is an architectural diagram of a point cloud processing system according to some embodiments;

FIG. 3 shows a point cloud processing method according to some embodiments;

FIG. 4 shows another point cloud processing method according to some embodiments;

FIG. 5 is still another point cloud processing method according to some embodiments;

FIG. 6 shows yet another point cloud processing method according to some embodiments;

FIG. 7 is a schematic structural diagram of a point cloud processing apparatus according to some embodiments;

FIG. 8 is a schematic structural diagram of another point cloud processing apparatus according to some embodiments;

FIG. 9 is a schematic structural diagram of a coding device according to some embodiments; and

FIG. 10 is a schematic structural diagram of a decoding device according to some embodiments.

DESCRIPTION OF EMBODIMENTS

The technical solutions in embodiments of this disclosure are clearly and completely described in the following with reference to the accompanying drawings in some embodiments. Apparently, the described embodiments are merely some rather than all of some embodiments. All other embodiments obtained by a person of ordinary skill in the art based on some embodiments without making creative efforts shall fall within the protection scope of this disclosure.
In order to have a clearer understanding of the technical solution provided in some embodiments, the key terms involved in some embodiments will be introduced first:

(1) Point Cloud. A point cloud refers to a set of discrete points in irregular distribution in space that express the spatial structure and surface attributes of a three-dimensional object or scene. Point clouds can be divided into different categories according to different classification standards. For example, according to obtaining methods of point clouds, point clouds can be divided into dense point clouds and sparse point clouds. For example, according to time sequence types of point clouds, point clouds can be divided into static point clouds and dynamic point clouds.

(2) Point cloud data. Geometry information and attribute information of each point in the point cloud together constitute point cloud data. Geometry information can also be referred to as three-dimensional position information. Geometry information of a point in the point cloud refers to spatial coordinates (x, y, z) of the point, and can include a coordinate value of the point in each coordinate axis direction of the three-dimensional coordinate system, for example, a coordinate value x in the X-axis direction, a coordinate value y in the Y-axis direction, and a coordinate value z in the Z-axis direction. Attribute information of a point in the point cloud can include at least one of the following: color information, material information, and laser reflection intensity information (which may be also referred to as reflectivity). , each point in the point cloud has the same amount of attribute information. For example, each point in the point cloud can have two types of attribute information: color information and laser reflection intensity information. For another example, each point in the point cloud can have three types of attribute information: color information, material information, and laser reflection intensity information.

(3) Point cloud compression (PCC). Point cloud coding refers to the process of coding the geometry information and attribute information of each point in the point cloud to obtain a compressed code stream. Point cloud coding can include two main processes: geometry information coding and attribute information coding. The current mainstream point cloud coding technology can be divided into geometry-based point cloud coding and projection-based point cloud coding for different types of point clouds. Herein, geometry-based point cloud compression (G-PCC) in moving picture expert group (MPEG) and the point cloud coding standard AVS-PCC in audio video coding standard (AVS) are used as examples.

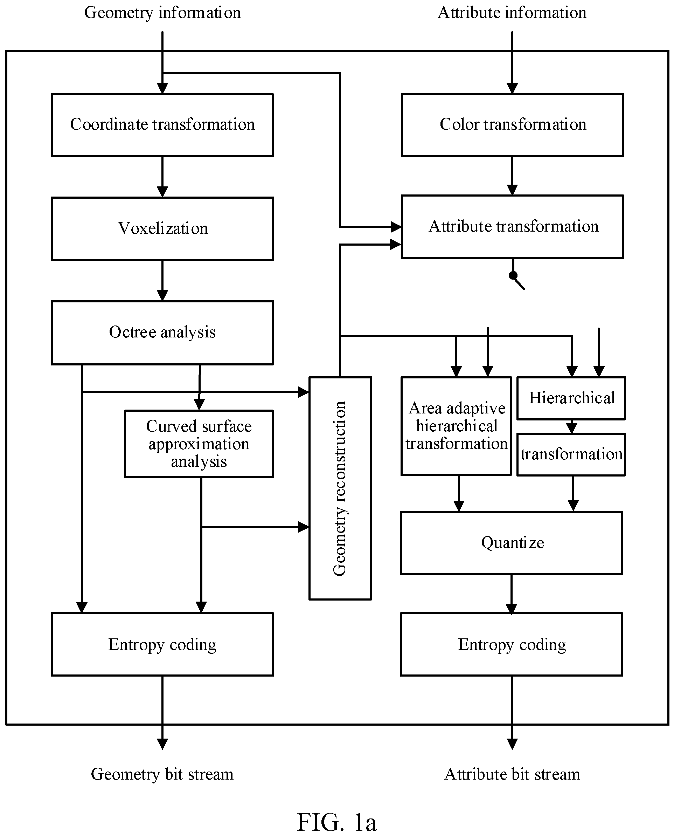

Coding frameworks of G-PCC and AVS-PCC are approximately the same, as shown in FIG. 1a, and can be divided into a geometry information coding process and an attribute information coding process. The geometry information coding process codes geometry information of each point in the point cloud data to obtain a geometry bit stream. The attribute information coding process codes attribute information of each point in the point cloud data to obtain an attribute bit stream. The geometry bit stream and the attribute bit stream together constitute the compressed code stream of the point cloud data.
Main operations and processing of the geometry information coding process can be found in the following description:

1. Pre-Processing: which may include coordinate transform and voxelization. Through scaling and translation operations, point cloud data in the three-dimensional space is converted into an integer form, and the minimum geometry position is moved to the coordinate origin.

2. Geometry octree (Octree) coding: The octree is a tree-shaped data structure. In three-dimensional space division, a preset bounding box is evenly divided, and each node has eight child nodes. "1" and "0" are used to indicate whether each sub-node of the octree is occupied, so that occupancy code information is obtained as the code stream of the point cloud geometry information. A bounding box is an algorithm for solving the optimal bounding space of a discrete point set. Geometry objects may be approximately replaced with slightly larger geometry objects (referred to as bounding boxes) with fewer characteristics.

3. Geometry entropy coding: Statistical compression coding is performed on the occupancy code information of the octree, and a binary (0 or 1) compressed code stream is finally outputted. Statistical coding is a lossless coding scheme that can effectively reduce the bit rate required to express the same signal. Content adaptive binary arithmetic coding (CABAC) may be used as a statistical coding scheme.

Main operations and processing of the attribute information coding process can be found in the following description:

1. Attribute recoloring: In the case of lossy coding, after the geometry information is coded, a coding end needs to decode and reconstruct the geometry information, that is, restore the geometry information of each point in the point cloud. Attribute information corresponding to one or more adjacent points is found from the original point cloud as the attribute information of the reconstructed point.

2. Transform attribute coding: An attribute transform algorithm (for example, DCT or Haar) is used to group and transform attribute information, and a transform coefficient is quantized. Through inverse quantization and inverse transform, a reconstructed attribute value is obtained. The difference between the original attribute and the reconstructed attribute value is calculated to obtain the attribute residual and the attribute residual is quantized. The quantized transform coefficient and attribute residual are coded.

3. Attribute information quantization: The fineness of quantization depends on a quantization parameter. In attribute prediction coding, entropy coding is performed on the quantized prediction residual information. In attribute transform coding and attribute prediction transform coding, entropy coding is performed on the quantized transform coefficient.

4. Attribute entropy coding: The quantized prediction residual information or transform coefficient uses run-length coding and arithmetic coding to achieve final compression. Information such as the corresponding coding mode and quantization parameter is also coded by an entropy coder.

(4) Point cloud decoding. Point cloud decoding refers to the process of decoding the compressed code stream obtained by point cloud coding, to reconstruct the point cloud, and specifically refers to the process of reconstructing the geometry information and attribute information of each point in the point cloud based on a geometry bit stream and an attribute bit stream in the compressed code stream. After the decoding end obtains the compressed code stream, entropy decoding is first performed on the geometry bit stream to obtain quantized geometry information of each point in the point cloud, and then inverse quantization is performed to reconstruct the geometry information of each point in the point cloud. Entropy decoding is first performed on the attribute bit stream to obtain the quantized prediction residual information or the quantized transform coefficient of each point in the point cloud. Then, the quantized prediction residual information is inversely quantized to obtain the reconstructed residual information, the quantized transform coefficient is inversely quantized to obtain the reconstructed transform coefficient, the reconstructed transform coefficient is inversely transformed to obtain the reconstructed residual information, and the attribute information of each point in the point cloud can be reconstructed according to the reconstructed residual information of each point in the point cloud. One-to-one correspondence between the reconstructed attribute information of each point in the point cloud and the reconstructed geometry information is sequentially established to reconstruct the point cloud.

In addition, this disclosure also involves the following technologies:

(1) Attribute prediction:

1. Point cloud reordering. The specific process is as follows:
Coordinates (x, y, z) of the point cloud are obtained, Morton codes or Hilbert codes of points are generated based on a space filling curve, and sorting is performed according to a coding order of coding the points (for example, ascending order) to obtain a Morton order or a Hilbert order. Taking the Morton code of geometry coordinates as an example, a geometry position of a point in the point cloud is represented by three-dimensional Cartesian coordinates (X, Y, Z). N bits are used to represent each coordinate value, and coordinates of a $k^{th}$ point ($X^k$, $Y^k$, $Z^k$) can be expressed as:

$$X^k = \left( x_{N-1}^k x_{N-2}^k \ldots x_1^k x_0^k \right)$$

$$Y^k = \left( y_{N-1}^k y_{N-2}^k \ldots y_1^k y_0^k \right)$$

$$Z^k = \left( z_{N-1}^k z_{N-2}^k \ldots z_1^k z_0^k \right)$$

A Morton code corresponding to the $k^{th}$ point can be expressed as follows:

$$M^k = \left( x_{N-1}^k y_{N-1}^k z_{N-1}^k, x_{N-2}^k y_{N-2}^k z_{N-2}^k, \ldots x_1^k y_1^k z_1^k, x_0^k y_0^k z_0^k \right)$$

Each three bits are expressed by octal numbers, $m_n^k = (x_n^k y_n^k z_n^k)$ , n = 0,1, ..., N - 1, and then the Morton code corresponding to the $k^{th}$ point can be expressed as:

$$M^k = \left( m_{N-1}^k m_{N-2}^k \ldots m_1^k m_0^k \right)$$

2. Order-based neighbor point selection. The specific process is as follows:
Order-based neighbor point selection includes a distance-based selection method and a spatial-relationship-and-distance-based selection method. The method is described below.

i) Distance-based method. Specific operations are as follows:
Among the first P neighbor candidate points in the Morton order or Hilbert order, where P can be determined according to the maxNumOfNeighbours field, the Manhattan distance d=|x-$x_i$|+|y-$y_i$|+|z-$z_i$| from each neighbor candidate point (the $i^{th}$ neighbor candidate point is expressed as ($x_i$, yi, $z_i$)) to a current to-be-decoded point (x, y, z) is calculated. After obtaining the Manhattan distance from each neighbor candidate point to the current to-be-decoded point (x, y, z), k neighbor candidate points with the shortest Manhattan distance can be used as neighbors of the current to-be-decoded point. Alternatively, the maximum distance among the k points with the shortest Manhattan distance is determined, all neighbor candidate points whose Manhattan distance is less than or equal to the maximum distance are used as neighbors of the current point, and m points with the shortest Manhattan distance are finally determined as the nearest neighbor of the current to-be-decoded point, where m and k are positive integers and m≤k.

ii) Spatial-relationship-and-distance-based selection method. Specific operations are as follows:
An initial block size is first determined, that is, an initial number N of right shift bits of a codeword corresponding to each point is determined. On this basis, N+3 is the corresponding parent block range.

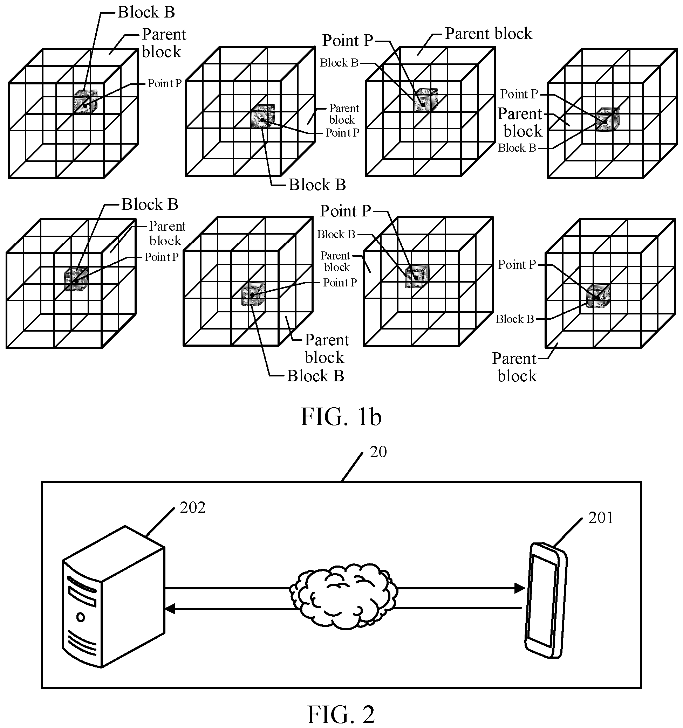

Then, the point clouds are traversed in a specific order. As shown in FIG. 1b, the nearest neighbor is searched from decoded points within the range of the parent block of block B of the current to-be-decoded point (point P) and a neighbor block that is coplanar, collinear, and copoint with the parent block (limited to the range of the first k points).
When the number of neighbor points of the current to-be-decoded point determined according to the above method is insufficient, neighbor point selection is performed according to the distance-based method in i).
3. Predicted value calculation. The specific process is as follows:
Assuming that the reconstructed attribute value of each neighbor is ($\hat{A}_{ij}$), j = 0,1 ... k, a predicted attribute value $\hat{A}_i$ of the current point is:

$$\hat{A}_i = \frac{\sum_{j=1}^k w_{ij} \hat{A}_{ij}}{\sum_{j=1}^k w_{ij}}$$

i) Distance-based weighted calculation:
In an implementation, the reciprocal of the Manhattan distance between the current to-be-decoded point and the neighbor point is used as the weight, and finally the weighted average of the reconstructed attribute values of k neighbor points is calculated to obtain the predicted attribute value. Assuming that the geometry coordinates of the current to-be-decoded point are $(x_i, y_i, z_i)$ and the geometry coordinates of the $j^{th}$ neighbor point are $(x_{ij}, y_{ij}, z_{ij})$, the weight $w_{ij}$ of the $j^{th}$ neighbor point is:

$$w_{ij} = \frac{1}{|x_i - x_{ij}| + |y_i - y_{ij}| + |z_i - z_{ij}|}$$

In another implementation, when components in the x, y, and z directions adopt different weights, the weight $w_{ij}$ of the $j^{th}$ neighbor point is:

$$w_{ij} = \frac{1}{a|x_i - x_{ij}| + b|y_i - y_{ij}| + c|z_i - z_{ij}|}$$

ii) Weighted calculation based on a distance and other parameters:
The weight of each neighbor point of the current to-be-decoded point is w=1/d, and the optimized weight of the neighbor candidate point whose distance is equal to the maximum distance is wm=(1/d)*dwm, where the value of dwm is the smaller value of Qstep (an attribute quantization step) and the number of neighbor candidate points whose distance is equal to the maximum distance.

(2) Attribute transform:

The core of attribute transform is attribute coding that combines prediction and transform. The specific process is as follows:
First, the to-be-coded point cloud after color space conversion and recoloring is reordered in ascending order of Hilbert codes, and then adaptive grouping and corresponding K-element transform are used. The specific process is as follows:

i) Point cloud grouping:
The point clouds are grouped sequentially based on the order of the space filling curve, and points with the same first L bits of the Hilbert codes are grouped into one group. When the number of points in the same group exceeds a preset limit point number, the group is subdivided. In addition, adjustment can also be made during grouping according to the number of points of the previous group.

ii) Intra-group prediction:
The prediction point selection range is among the first P points of the first point in the current group, and P can be determined based on the maxNumOfNeighbours field. The P points are predicted one by one, and a unified prediction value is selected or calculated for each group. For example, the predicted value of the first point of the current group is used as the predicted value of the current group.

iii) Residual-value-based transform:
K_i-element DCT for discrete cosine transform (DCT transform) is performed on the predicted attribute residual value of each group of points, where K_i=2, ..., 8, and quantized entropy coding is performed on the transform coefficient. When K_i=1, there is no need to perform any transform calculation, and quantized entropy coding is directly performed on the attribute residual value. The obtained transform coefficient is quantized.

(3) Entropy coding:

The quantized (in a lossy case) signed predicted attribute residual coefficient or transform coefficient is binarized and processed. Entropy coding can be Variable-length coding, content adaptive binary arithmetic coding, run-length coding, or the like. Details are as follows:

1. Variable-length coding:

Codewords of different lengths are used to represent the residuals or coefficients that need to be coded. The code length needs to be designed based on the probability of symbol occurrence. Commonly used Variable-length coding includes exponential Golomb coding (exp-Golomb) and arithmetic coding.

2. Content adaptive binary arithmetic coding (CABAC) mainly includes the following operations:
Binarization: CABAC uses binary arithmetic coding, which means that only two numbers (1 or 0) are coded. A non-binary numerical symbol, such as a conversion coefficient or a motion vector, is first binarized or converted into a binary codeword before arithmetic coding. This process is similar to converting a numerical value into a variable-length codeword. In a specific implementation process, this binary codeword is further coded by an arithmetic coder before transmission.

Context model selection: The context model is a probabilistic model that is selected based on statistics of the most recent coded data symbols. This model stores the probability that each 'bin' is 1 or 0.

Arithmetic coding: The arithmetic coder codes each 'bin' according to the selected probabilistic model.

Probability update: The selected context model is updated based on the coding value. For example, when the value of 'bin' is 1, the frequency count of 1 is increased.

3. Run-length coding:

A number of consecutive points being a specific symbol in statistical data is recorded as the run-length. When the current symbol is zero, the run-length value is increased by 1. When the current symbol is non-zero, the run-length value is first coded, then the non-zero attribute prediction residual is coded, and the run-length value is finally set to 0 to restart counting. A commonly used entropy coding scheme, such as variable-length coding or CABAC, can be used for the residual.

Specifically, run-length coding is divided into two types: fixed-length run-length coding and variable-length run-length coding. Fixed-length run-length coding means that the number of binary digits used in the coding run-length is fixed. Variable-length run-length coding refers to coding different ranges of run-lengths using different numbers of binary digits, and a flag bit needs to be added to indicate the number of binary digits used.

Based on the above related descriptions of point clouds, point cloud data, point cloud coding, point cloud decoding, attribute prediction, attribute transform, and entropy coding, embodiments of this disclosure provide a point cloud processing solution. When a to-be-coded point in a point cloud needs to be coded, a limit parameter of the point cloud can be set, attribute information of the to-be-coded point in the point cloud is obtained, the attribute information of the to-be-coded point is coded, and the coding is controlled according to the limit parameter. When the to-be-decoded point in the point cloud needs to be decoded, a coded code stream of a to-be-decoded point in the point cloud can be obtained, the coded code stream of the to-be-decoded point is decoded, and a decoding process is controlled according to the limit parameter. In some embodiments, the coding and decoding process of attribute information of each point in the point cloud is controllable through the limit parameter of the point cloud, thereby improving the coding and decoding performance of the attribute information of the point cloud.

The point cloud processing solution provided by some embodiments can also be combined with cloud computing, cloud storage, and other technologies in cloud technologies. Cloud computing is a computing model that distributes computing tasks on a resource pool including a large number of computers, enabling various application systems to obtain computing power, storage space, and information services as needed. Cloud computing can provide powerful computing support for the coding stage of point cloud attributes and the decoding stage of point cloud attributes, which can greatly improve the coding efficiency of point cloud attributes and improve the decoding efficiency of point cloud attributes. Cloud storage is a new concept developed based on the concept of cloud computing. A distributed cloud storage system (abbreviated as a storage system below) is a storage system that combines many different types of storage devices (storage devices are also referred to as storage nodes) in a network through application software or an application interface based on cluster application, a grid technology, a distributed storage file system, and other functions, so that the storage devices work in coordination with each other to jointly provide data storage and service access functions to the outside. Cloud storage can provide powerful storage support for the coding stage of point cloud attributes and the decoding stage of point cloud attributes, which can greatly improve the coding efficiency of point cloud attributes and improve the decoding efficiency of point cloud attributes. In addition, the point cloud processing solution provided by some embodiments can also be combined with artificial intelligence. Some embodiments mainly relate to the deep learning technology in artificial intelligence. Specifically, the model used in the coding and decoding process can be optimized and trained by training a data set. For example, the initial model can be trained by training a data set to obtain the context model.

Based on the above description, a point cloud processing system suitable for implementing the point cloud processing solution provided by some embodiments is introduced below with reference to FIG. 2. As shown in FIG. 2, a point cloud processing system 20 may include a coding device 201 and a decoding device 202. The coding device 201 may be a terminal or a server. The decoding device 202 may be a terminal or a server. The coding device 201 and the decoding device 202 may establish a communication connection. The terminal may be a smartphone, a tablet computer, a notebook computer, a desktop computer, a smart speaker, a smartwatch, a vehicle-mounted terminal, a smart TV, or the like, but is not limited thereto. The server can be an independent physical server, or a server cluster including multiple physical servers or a distributed system, or can be a cloud server that provides basic cloud computing services such as cloud services, cloud databases, cloud computing, cloud functions, cloud storage, network services, cloud communications, middleware services, domain name services, security services, content delivery networks (CDN), big data, and artificial intelligence platforms.

(1) Coding device 201:

The coding device 201 can obtain point cloud data (that is, geometry information and attribute information of each point in the point cloud). The point cloud data can be obtained in two manners: scene capture or device generation. Scene capture of point cloud data refers to collecting real-world visual scenes through a capture device associated with the coding device 201, to obtain point cloud data. The capture device is configured to provide point cloud data obtaining services for the coding device 201. The capture device may include, but is not limited to any one of the following: a camera device, a sensing device, and a scanning device. The camera device can include ordinary cameras, stereo cameras, light field cameras, or the like, the sensing device can include laser devices, radar devices, or the like, and the scanning device can include three-dimensional laser scanning devices. The capture device associated with the coding device 201 may be a hardware component provided in the coding device 201. For example, the capture device may be a camera, a sensor, or the like of the terminal. The capture device associated with the coding device may also be a hardware device connected to the coding device 201, such as a camera connected to the server. Device generation of point cloud data refers to generating point cloud data by the coding device 201 based on virtual objects (for example, virtual three-dimensional objects and virtual three-dimensional scenes obtained through three-dimensional modeling).

The coding device 201 can code geometry information of each point in the point cloud to obtain a geometry bit stream (including geometry coding information of each point in the point cloud), and can code attribute information of each point in the point cloud to obtain an attribute bit stream (including attribute coding information of each point in the point cloud). In particular, when the coding device 201 codes the attribute information of the to-be-coded point in the point cloud, the limit parameter of the point cloud can be set. Based on the limit parameter of the point cloud, obtained attribute information of the to-be-coded point can be coded, thereby controlling the coding process. After obtaining the compressed code stream of the point cloud, the coding device 201 transmits the compressed code stream (that is, the attribute bit stream and the geometry bit stream) to the decoding device 202.

(2) Decoding device 202:

After receiving the compressed code stream (that is, the attribute bit stream and the geometry bit stream) transmitted by the coding device 201, the decoding device 202 can decode the geometry bit stream to reconstruct geometry information of each point in the point cloud, and can decode the attribute bit stream to obtain attribute information of each point in the point cloud. In particular, when the decoding device 202 decodes the to-be-decoded point in the point cloud, the limit parameter of the point cloud can be obtained, and the obtained coded code stream of the to-be-decoded point is decoded based on the limit parameter of the point cloud, thereby controlling the decoding process. After obtaining the reconstructed geometry information and the reconstructed attribute information of each point in the point cloud, the decoding device 202 establishes a one-to-one correspondence between the reconstructed geometry information and the reconstructed attribute information of each point in the point cloud, to reconstruct the point cloud.

In some embodiments, when the to-be-coded point in the point cloud needs to be coded, the limit parameter of the point cloud can be set, the attribute information of the to-be-coded point in the point cloud is obtained, the attribute information of the to-be-coded point is coded, and the coding process is controlled according to the limit parameter. When the to-be-decoded point in the point cloud needs to be decoded, the coded code stream of the to-be-decoded point in the point cloud can be obtained, the coded code stream of the to-be-decoded point is decoded, and the decoding process is controlled according to the limit parameter. In some embodiments, the coding and decoding process of attribute information of each point in the point cloud is controllable through the limit parameter of the point cloud, thereby improving the coding and decoding performance of the attribute information of the point cloud. The point cloud processing system described in some embodiments is for more clearly describing the technical solutions in some embodiments, and does not constitute a limitation on the technical solutions provided in some embodiments. A person of ordinary skill may learn that with evolution of a network architecture and appearance of a new service scenario, the technical solutions provided in some embodiments are also applicable to a similar technical problem.

Based on the relevant description of the point cloud processing system mentioned above, a more detailed introduction of the point cloud processing solution provided in the present embodiment will be provided below combined with the accompanying drawings.

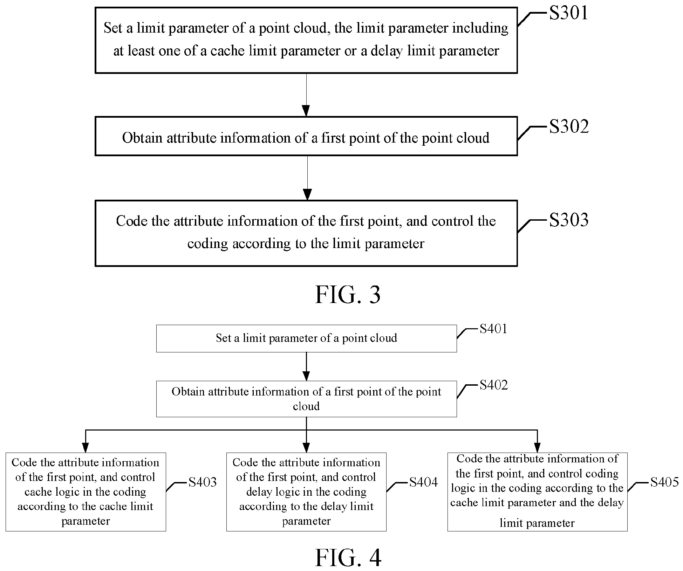

FIG. 3 shows a point cloud processing method according to some embodiments. The point cloud processing method can be executed by a computer device. Specifically, the computer device can be the coding device 201 in the point cloud processing system 20 shown in FIG. 2. As shown in FIG. 3, the point cloud processing method may include the following operation S301 to operation S303:

S301: Set a limit parameter of a point cloud, the limit parameter including at least one of a cache limit parameter or a delay limit parameter.

The limit parameter is configured for setting a trigger condition for coding attribute information of a to-be-coded point in the point cloud. The limit parameter may include at least one of a cache limit parameter and a delay limit parameter. The cache limit parameter is used to control cache logic in the coding. For example, when a number of intermediate coefficients (for example, residual and transform coefficients corresponding to the attribute information of the to-be-coded point) corresponding to the attribute information of the to-be-coded point in a cache queue meets the trigger condition (for example, the number of intermediate coefficients corresponding to the attribute information of the to-be-coded point in the cache queue reaches a cache threshold indicated by the cache parameter) set based on the cache limit parameter, the computer device (the coding device) codes the intermediate coefficient corresponding to the attribute information of the to-be-coded point in the cache queue. Similarly, the delay limit parameter is used to control coding logic in the coding. For example, when a delay amount of the intermediate coefficient corresponding to the attribute information of the to-be-coded point meets a trigger condition (for example, the delay amount of the intermediate coefficient corresponding to the attribute information of the to-be-coded point reaches a delay threshold indicated by the delay parameter) set based on the delay limit parameter, the computer device (the coding device) codes the intermediate coefficient corresponding to the attribute information of the to-be-coded point. The delay amount is used to indicate the number of intermediate coefficients corresponding to the attribute information of the current to-be-coded point.

A setting manner of the limit parameter includes any one or more of the following: setting the limit parameter to a default value; setting the limit parameter to a fixed value, and encapsulating the set limit parameter into a coded code stream obtained by coding; setting the limit parameter to a variable value, and encapsulating the set limit parameter into a coded code stream obtained by coding, for example, setting the limit parameter to a in a coded code stream 1, setting the limit parameter to b in a coded code stream 2, and setting the limit parameter to c in a coded code stream 3, where a, b, and c are different from each other; and dynamically adjusting the value of the limit parameter during the coding process, and encapsulating the dynamically adjusted limit parameter into a coded code stream obtained by coding. Taking the coding as run-length coding as an example, the computer device can count lengths of the first Q runs, dynamically adjust the value of the limit parameter according to the lengths of the first Q runs, and encapsulate the dynamically adjusted limit parameter into the coded code stream formed by the coding. When the limit parameter is not set, the limit parameter is a default value. Various setting manners are used to limit the limit parameter, and the coding delay can be flexibly controlled according to actual needs, thereby ensuring the coding performance of attribute information of the point cloud in various scenarios.

S302: Obtain attribute information of a first point of the point cloud.

The attribute information of the to-be-coded point may include at least one of the following: color information, material information, and laser reflection intensity information (which may be also referred to as reflectivity). , each point in the point cloud has the same amount of attribute information. For example, each point in the point cloud can have two types of attribute information: color information and laser reflection intensity information. For another example, each point in the point cloud can have three types of attribute information: color information, material information, and laser reflection intensity information. The attribute information of the to-be-coded point can be generated based on data collected by a collection device (for example, cameras and 3D laser scanners), or directly generated by a computer based on virtual three-dimensional objects and scenes.

S303: Code the attribute information of the first point, and control the coding according to the limit parameter.

A manner of coding the attribute information of the to-be-coded point includes: The attribute information of the to-be-coded point is coded in unit of a number of points, and the attribute information of the to-be-coded point is coded in unit of a number of groups. Coding in unit of a number of points refers to coding a point in the point cloud as a basic coding unit. Coding in unit of a number of groups refers to coding a group (a group can include at least one point in the point cloud) in the point cloud as a basic coding unit.

In an implementation, an implementation of the computer device coding the attribute information of the to-be-coded point in unit of a number of points is: converting the attribute information of the to-be-coded point, to obtain an intermediate coefficient of the to-be-coded point; where the converting the attribute information of the to-be-coded point can be: predicting the attribute information of the to-be-coded point, to obtain the residual between the prediction information of the to-be-coded point and the attribute information of the to-be-coded point; or can be: after obtaining the residual, transforming the residual to obtain a transform coefficient. That is, the intermediate coefficient of the to-be-coded point obtained by converting the attribute information of the to-be-coded point can be a residual coefficient or a transform coefficient.

After obtaining the intermediate coefficient of the to-be-coded point, the computer device can write the intermediate coefficient of the to-be-coded point to the cache, and read the intermediate coefficient of the to-be-coded point from the cache for coding. For example, the computer device can write the intermediate coefficient of the to-be-coded point to a cache queue set based on the cache limit parameter. When the cache queue is full (for example, intermediate coefficients of to-be-coded points collectively stored in the cache queue reach a cache threshold), the computer device reads the intermediate coefficient of the to-be-coded point from the cache queue for coding. The computer device can also obtain a delay amount of the intermediate coefficient of the current to-be-coded point. When the delay amount of the intermediate coefficient of the current to-be-coded point reaches a delay threshold, the computer device codes the intermediate coefficient of the current to-be-coded point. For a specific implementation of the computer device coding the intermediate coefficient of the to-be-coded point, refer to the above implementation of point cloud coding. In this embodiment, the attribute information of the to-be-coded point is converted in unit of a number of points, and the obtained intermediate coefficient is written to the cache, so that the intermediate coefficient is read from the cache for coding, which can control the delay of the point cloud coding process, avoid an excessively long waiting time for point cloud coding, and help improve the coding and decoding performance of attribute information of the point cloud.

In another implementation, an implementation of the computer device coding the attribute information of the to-be-coded point in unit of a number of groups is: grouping attribute information of to-be-coded points, to obtain multiple point cloud groups. The basis for grouping can be set according to actual coding requirements. In an embodiment, the computer device can group the attribute information of the to-be-coded points based on the order of a space filling curve. For example, the computer device can group the attribute information of the to-be-coded points with the same first L bits of Hilbert codes into a group. After obtaining multiple point cloud groups, the computer device can convert the attribute information of the to-be-coded points in the point cloud groups to obtain converted point cloud groups. For a specific implementation of converting the attribute information of the to-be-coded point in the point cloud group, refer to the previous embodiment. The converted point cloud group includes intermediate coefficient of the to-be-coded point, and the intermediate coefficient includes a residual coefficient or a transform coefficient.

After obtaining the converted point cloud group, the computer device can write the converted point cloud group to the cache, and sequentially read the intermediate coefficients of the to-be-coded points in the converted point cloud group from the cache for coding. For example, the computer device can write the converted point cloud group to a cache queue set based on the cache limit parameter. When the cache queue is full (for example, the converted point cloud group stored in the cache queue reaches a cache threshold), the computer device reads the converted point cloud group from the cache queue for coding. The computer device may also obtain a delay amount of the current converted point cloud group. When the delay amount of the current converted point cloud group reaches a delay threshold, the computer device codes the current converted point cloud group. For a specific implementation of the computer device coding the converted point cloud group, refer to the above implementation of point cloud coding. In this embodiment, the attribute information of the to-be-coded point is converted in unit of a number of groups, and the obtained intermediate coefficient is written to the cache, so that the intermediate coefficient is read from the cache for coding, which can control the delay of the point cloud coding process, avoid an excessively long waiting time for point cloud coding, and help improve the coding and decoding performance of attribute information of the point cloud.

In this embodiment of this disclosure, when the to-be-coded point in the point cloud needs to be coded, the limit parameter of the point cloud can be set, the attribute information of the to-be-coded point in the point cloud is obtained, the attribute information of the to-be-coded point is coded, and the coding process is controlled according to the limit parameter. In this embodiment of this disclosure, the coding process of the attribute information of the to-be-coded point is controllable by setting the limit parameter of the point cloud, thereby improving the coding performance of the attribute information of the point cloud.

FIG. 4 shows another point cloud processing method according to some embodiments. The point cloud processing method can be executed by a computer device. The computer device specifically can be the coding device 201 in the point cloud processing system 20 shown in FIG. 2. As shown in FIG. 4, the point cloud processing method may include the following operation S401 to operation S405:

S401: Set a limit parameter of a point cloud.

The limit parameter includes at least one of a cache limit parameter (coeffLengthControl) or a delay limit parameter (maxNumofCoeff). The limit parameter is configured for determining a coding limit point number threshold.

In an implementation, when the limit parameter includes only one type of parameter, a unit of the limit parameter includes any one of the following: a unit of a number of points and a unit of a number of groups. Limiting in unit of a number of points means limiting a number of to-be-coded points when coding in unit of a number of points. Limiting in unit of a number of groups means limiting a number of to-be-coded groups when coding in unit of a number of groups. When the limit parameter is a cache limit parameter, the coding limit point number threshold is a cache limit point number threshold. The unit of the cache limit parameter can be a number of points or a number of groups. Similarly, when the limit parameter is a delay limit parameter, the coding limit point number threshold is a delay limit point number threshold. The unit of the delay limit parameter can be a number of points or a number of groups. Details are as follows:

When the limit parameter is in unit of a number of points and the value of the limit parameter is X1, the coding limit point number threshold is a total number of intermediate coefficients of X1 to-be-coded points. For example, assuming that the limit parameter is a cache limit parameter in unit of a number of points and the value of the cache limit parameter is 1024, the coding limit point number threshold is the total number of intermediate coefficients of 1024 to-be-coded points. For another example, assuming that the limit parameter is a delay limit parameter in unit of a number of points and the value of the delay limit parameter is 2048, the coding limit point number threshold is the total number of intermediate coefficients of 2048 to-be-coded points.

When the cache limit parameter is in unit of a number of groups and the value of the limit parameter is X2, the coding limit point number threshold is a total number of intermediate coefficients of to-be-coded points in X2 point cloud groups. For example, assuming that the limit parameter is a cache limit parameter in unit of a number of groups and the value of the cache limit parameter is 64, the coding limit point number threshold is the total number of intermediate coefficients of to-be-coded points of 64 point cloud groups. Assuming that the limit parameter is a delay limit parameter in unit of a number of groups and the value of the delay limit parameter is 128, the coding limit point number threshold is the total number of intermediate coefficients of to-be-coded points of 128 point cloud groups.

When the limit parameter is in unit of a number of groups, the value of the limit parameter is X3, and a number of points in each point cloud group is limited to X4, the coding limit point number threshold is a total number of intermediate coefficients of to-be-coded points in X3 point cloud groups, where the total number does not exceed the value of X3 *X4. For example, assuming that the limit parameter is a cache limit parameter in unit of a number of groups and the value of the cache limit parameter is 64, and the number of points in each point cloud group is limited to 4, the coding limit point number threshold is the total number of intermediate coefficients of to-be-coded points of 64 point cloud groups. The total number does not exceed 64 * 4=256. Assuming that the limit parameter is a delay limit parameter in unit of a number of groups, the value of the delay limit parameter is 128, and the number of points in each point cloud group is limited to 4, the coding limit point number threshold is the total number of intermediate coefficients of to-be-coded points of 128 point cloud groups. The total number does not exceed 128*4=512. In this embodiment, for different types and different units of limit parameters, the number of to-be-coded points that require delay control during coding is determined accordingly, so that accurate delay control can be performed on the coding process in various limit parameter setting scenarios, to ensure coding and decoding performance of the attribute information of the point cloud.

In another implementation, when the limit parameter includes two types of parameters, a unit of the limit parameter includes any one or more of the following: unit of a number of points, unit of a number of groups, and unit of a multiple relationship. A limit parameter 1 being in unit of a multiple refers to: when a limit parameter 2 limits the number of to-be-coded points in unit of a number of points, the limit parameter 1 limits the number of to-be-coded points in unit of a number of points, and the number of to-be-coded points limited by the limit parameter 1 is a multiple of the number of to-be-coded points limited by the limit parameter 2. Specifically, when the cache limit parameter is in unit of a multiple relationship and the value of the cache limit parameter is Y1, a cache limit point number threshold is Y1 times a delay limit point number threshold. When the delay limit parameter is in unit of a multiple relationship and the value of the delay limit parameter is Y2, the delay limit point number threshold is Y2 times the cache limit point number threshold. For example, assuming that the delay limit parameter (the limit parameter 1) is in unit of a multiple and is 2, when the cache limit parameter (the limit parameter 2) is in unit of a number of points and the value of the cache limit parameter is 1024, the delay limit parameter is in unit of a number of points and the delay limit parameter is 1024*2=2048.

When the limit parameter 2 limits the number of to-be-coded groups in unit of a number of groups, the limit parameter 1 limits the number of to-be-coded groups in unit of a number of groups, and the number of to-be-coded groups limited by the limit parameter 1 is a multiple of the number of to-be-coded groups limited by the limit parameter 2. Specifically, when the cache limit parameter is in unit of a multiple relationship and the value of the cache limit parameter is Y1, the cache limit point number threshold is Y1 times the delay limit point number threshold. When the delay limit parameter is in unit of a multiple relationship and the value of the delay limit parameter is Y2, the delay limit point number threshold is Y2 times the cache limit point number threshold. For example, assuming that the delay limit parameter (the limit parameter 1) is in unit of a multiple and is 2, when the cache limit parameter (the limit parameter 2) is in unit of a number of groups and the value of the cache limit parameter is 64, the delay limit parameter is in unit of a number of groups and the delay limit parameter is 64*2=128. In this embodiment, the cache limit parameter and the delay limit parameter are combined to determine the number of to-be-coded points that require delay control during coding, and accurate delay control can be performed on the coding process in the limit parameter setting scenario including the two parameters: the cache limit parameter and the delay limit parameter, to ensure the coding and decoding performance of the attribute information of the point cloud.

It can be known from the foregoing that a combination manner includes: the limit parameter 1 and the limit parameter 2 are both in unit of a number of points or in unit of a number of groups; the limit parameter 1 is in unit of a number of points, and the limit parameter 2 is in unit of a number of groups, or the limit parameter 2 is in unit of a multiple; and the limit parameter 1 is in unit of a number of groups, and the limit parameter 2 is in unit of a number of points, or the limit parameter 2 is in unit of a multiple. The limit parameter 1 may be any one of the cache limit parameter and the delay limit parameter, and the limit parameter 2 may be the other one of the cache limit parameter and the delay limit parameter. The limit parameter includes the number of parameter types, and the corresponding units are flexibly set, so that the coding delay can be flexibly controlled according to actual needs, thereby ensuring the coding performance of the attribute information of the point cloud in various scenarios.

S402: Obtain attribute information of a first point in the point cloud.

For a specific implementation of operation S402, refer to the implementation of operation S302 shown in FIG. 3.

When the limit parameter is a cache limit parameter, operation S403 is performed. When the limit parameter is a delay limit parameter, operation S404 is performed. When the limit parameter includes a cache limit parameter and a delay limit parameter, operation S405 is performed.

S403: Code the attribute information of the first point, and control cache logic in the coding according to the cache limit parameter.

In an implementation, the cache limit parameter is used to limit the number of to-be-coded points that are allowed to be written to the cache, and each to-be-coded point may include one or more intermediate coefficients. The cache limit parameter is used to control the number of to-be-coded points that are allowed to be written to the cache, so that the coding process of attribute information of the to-be-coded point is controllable, which can avoid an excessively long waiting time for point cloud coding, thereby improving the coding performance of the attribute information of the point cloud. Specifically, the computer device determines a cache limit point number threshold according to the cache limit parameter. The cache limit point number threshold is used to limit a number of to-be-coded points allowed to be written to the cache. Based on the number of to-be-coded points written to the cache reaching the cache limit point number threshold, the computer device reads the intermediate coefficient of the to-be-coded point from the cache for coding. The cache limit point number threshold determined based on the cache limit parameter is used to control the number of to-be-coded points that are allowed to be written to the cache. When the number of to-be-coded points that are allowed to be written to the cache reaches the cache limit point number threshold, coding is triggered, which can avoid an excessively long waiting time for point cloud coding, thereby improving the coding performance of the attribute information of the point cloud.

In an embodiment, the coding scheme is based on a number of groups, that is, a group in the point cloud is coded as a basic coding unit. When controlling to read the intermediate coefficient of the to-be-coded point from the cache for coding when the number of to-be-coded points written to the cache reaches the cache limit point number threshold, the computer device counts the total number of to-be-coded points included in each point cloud group in the cache. When the number of groups stored in the cache is M, and the total number of to-be-coded points included in the M point cloud groups reaches the cache limit point number threshold, the computer device reads the intermediate coefficient of the to-be-coded point included in the M point cloud groups from the cache for coding. Further, the computer device clears the cache and continues to write the intermediate coefficient of the to-be-coded point to the cache. In this embodiment, when coding in unit of a number of groups, the total number of to-be-coded points in all point cloud groups is controlled by the cache limit point number threshold, to perform delay control on the coding process of the attribute information of the to-be-coded point, which helps improve coding performance of the attribute information of the point cloud.

In another embodiment, the coding scheme is based on a number of groups, that is, a group in the point cloud is coded as a basic coding unit. When controlling to read the intermediate coefficient of the to-be-coded point from the cache for coding when the number of to-be-coded points written to the cache reaches the cache limit point number threshold, the computer device counts the number M of point cloud groups included in the cache, and calculates, based on M and the point number limit threshold of the point cloud group, the total number of to-be-coded points included in the cache. For example, assuming M=64 and the point number limit threshold is 8, the total number of to-be-coded points included in the cache is 64*8=512. When the total number of to-be-coded points included in the cache reaches the cache limit point number threshold, the computer device controls to read the intermediate coefficient of the to-be-coded point included in the M point cloud groups from the cache for coding. Further, the computer device clears the cache and continues to write the intermediate coefficient of the to-be-coded point to the cache. In this embodiment, when coding in unit of a number of groups, the number of to-be-coded points in each point cloud group is controlled by the point number limit threshold, and the total number of to-be-coded points in all point cloud groups is controlled by the cache limit point number threshold, to perform delay control on the coding process of the attribute information of the to-be-coded point, which helps improve coding performance of the attribute information of the point cloud.

In another implementation, the coding scheme is in unit of a number of groups, that is, a group (a group may include at least one point in the point cloud) in the point cloud is coded as a basic coding unit. The computer device determines, according to the cache limit parameter, a number of point cloud groups allowed to be written to the cache. Each time the number of point cloud groups written to the cache reaches the group number threshold, the computer device reads, from the cache for coding, the intermediate coefficient of the to-be-coded point included in the point cloud groups written to the cache. For example, when the value of the cache limit parameter is 64, the computer device determines that the number of point cloud groups allowed to be written to the cache is 64 according to the cache limit parameter. Each time the number of point cloud groups written to the cache is 64, the computer device reads the intermediate coefficients of the to-be-coded points included in the 64 point cloud groups from the cache for coding. In this embodiment, when coding in unit of a number of groups, delay control is performed, based on the group number threshold, on the number of point cloud groups allowed to be written to the cache, which helps improve the coding performance of the attribute information of the point cloud.

Further, the computer device can arrange, according to a preset arrangement manner, the point cloud groups written to the cache, and encapsulate the preset arrangement manner into the coded code stream obtained by coding. A specific implementation of the computer device encapsulating the arrangement manner of the intermediate coefficients of the point cloud group in the cache into the coded code stream obtained by coding is: each arrangement manner corresponds to an index value, and the computer device writes an index value corresponding to an arrangement manner of the intermediate coefficients of the point cloud group to the cache in the coded code stream. By writing the index value corresponding to the arrangement manner of the intermediate coefficients of the point cloud group in the coded code stream, it is convenient to decode the coded code stream based on the index value, which helps improve the decoding processing efficiency of the coded code stream. The computer device can also arrange, according to a preset arrangement manner, the point cloud groups written to the cache, and directly send the preset arrangement manner to the decoding device. The computing device may also arrange, according to a default arrangement manner, the point cloud groups written to the cache. When arranging, according to the default arrangement manner, the point cloud groups written to the cache, the computer device does not need to inform the decoding device of the arrangement manner. The preset arrangement manner includes any one of the following: a fixed arrangement manner and a dynamic arrangement manner. The fixed arrangement manner means that an arrangement manner of intermediate coefficients of the point cloud group cached each time is the same (for example, according to similarity, or according to the number of to-be-coded points included in the group), and the dynamic arrangement manner means that an arrangement manner of intermediate coefficients of the point cloud group in the cache changes. For example, the arrangement manner of the intermediate coefficients of the point cloud group cached for the first time is the same as the arrangement manner of the intermediate coefficients of the point cloud group cached for the second time, and the arrangement manner of the intermediate coefficients of the point cloud group cached for the third time is different. In this embodiment, the point cloud groups written to the cache are arranged in either a fixed arrangement manner or a dynamic arrangement manner, which can ensure the orderly coding of the point cloud and help improve the decoding processing efficiency of the coded code stream.

In another embodiment, the coding includes run-length coding, and the computer device determines, according to the cache limit parameter, a cache limit point number of to-be-coded points that are allowed to be written to the cache, where the cache limit point number threshold is used to limit a number of to-be-coded points that are allowed to be written to the cache during the coding process. For a manner of determining the cache limit point number threshold, refer to the manner of determining the coding limit point number threshold in operation S401. The computer device sets, during run-length coding, a run-length used to count consecutive specific symbols. At the beginning, the computer device sets the run-length to an initial value, and in a process of sequentially reading the intermediate coefficients of the to-be-coded points from the cache, when an intermediate coefficient whose value is a first type of symbol is read, increases a count value of the run-length by one step; when a number of to-be-coded points that are read is equal to the cache limit point number threshold, codes the current run-length, or codes the cache limit point number threshold and an intermediate coefficient of a to-be-coded point whose value is a the first type of symbol, and sets the run-length to the initial value for recount; and when an intermediate coefficient of a to-be-coded point whose value is a second type of symbol is read, codes the current run-length and the intermediate coefficient of the second type of symbol, and resets the run-length to the initial value for recount.

For example, it is assumed that the cache limit parameter is in unit of a number of points and is 1024 (that is, the cache limit point number is 1024). When the computer device uses run-length coding to code the residual of the attribute information of the to-be-coded point, the computer device counts the number of consecutive points being a specific symbol (for example, 0) in the residual of the attribute information of the to-be-coded points, and records the number as a run-length. When the residual of the attribute information of the current to-be-coded point is a specific symbol, the value of the run-length is increased by 1. Each time the number of to-be-coded points in the cache reaches 1024, the computer device codes the value of the run-length and the residual of the attribute information of the current to-be-coded point, sets the run-length to the initial value (for example, 0), and recounts the run-length. When the residual of the attribute information of the current to-be-coded point is a non-specific symbol (for example, non-0), the computer device codes the current value of the run-length and the residual of the attribute information of the current to-be-coded point, sets the run-length to the initial value (for example, 0), and recounts the run-length.

In this embodiment, when the intermediate coefficients of the to-be-coded points are sequentially read from the cache, the coding control is performed on the intermediate coefficients of different symbols through the run-length, so that the intermediate coefficients of different symbols are coded separately, which helps ensure the coding performance of the attribute information of the point cloud.

S404: Code the attribute information of the first point, and control delay logic in the coding according to the delay limit parameter.

The delay limit parameter is used to perform delay control on the number of to-be-coded points, so that the coding process of attribute information of the to-be-coded point is controllable, which can avoid an excessively long waiting time for point cloud coding, thereby improving the coding performance of the attribute information of the point cloud. The specific coding scheme used by the computer device to code the attribute information of the to-be-coded point is a coding scheme that requires statistics collection on the previous points. For example, the specific coding scheme used by the computer device to code the attribute information of the to-be-coded point may be run-length coding. The following uses run-length coding as an example of the coding scheme for description:

In an implementation, the computer device determines a delay limit point number threshold according to the delay limit parameter, where the delay limit point number threshold is used to limit a number of to-be-coded points that are allowed to be delayed during coding. For a manner of determining the delay limit point number threshold, refer to the manner of determining the coding limit point number threshold in operation S401. In the process of run-length coding, the run-length used to count consecutive third type of symbols is set, and the run-length is set to an initial value (for example, 0). In the process of sequentially reading the intermediate coefficients of the to-be-coded points from the cache, when the computer device reads the intermediate coefficient whose value is a third type of symbol, the computer device increases the count value of the run-length by one step, and obtains the count value of the run-length. When the count value of the run-length reaches the delay limit point number threshold, the computer device performs parameter coding processing and resets the run-length to the initial value for recount. The parameter coding processing by the computer device refers to: the computer device codes the current run-length; or the computer device codes a limit identifier, where the limit identifier is configured for setting the run-length to a preset value (for example, the preset value may be a delay limit point number threshold); or the computer device codes the delay limit point number threshold and the intermediate coefficient of the to-be-coded point whose value is a specific symbol. When reading an intermediate coefficient of a to-be-coded point whose value is a non-specific symbol, the computer device codes the current run-length and the intermediate coefficient of the non-specific symbol, and resets the run-length to the initial value for recount.

For example, it is assumed that the current run-length is 63, the specific symbol is 0, and the delay limit point number threshold is 64. When the computer device reads that the value of the intermediate coefficient of the to-be-coded point is 0, the current run-length is 63+1=64. The computer device codes the current run-length (64), or the computer device codes the limit identifier, or the computer device codes the delay limit point number threshold (64) and the intermediate coefficient of the to-be-coded point whose value is a specific symbol, and resets the run-length to the initial value for recount. When the computer device reads that the value of the intermediate coefficient of the to-be-coded point is 1 (non-0), the computer device codes the current run-length (63) and the intermediate coefficient of the to-be-coded point with a value of 1, and resets the run-length to the initial value for recount.

In this embodiment, during the process of controlling the delay logic in the coding according to the delay limit parameter, when the intermediate coefficients of the to-be-coded points are read sequentially from the cache, the coding control is performed on the intermediate coefficients of different symbols through the run-length, when the count value of the run-length reaches the delay limit point number threshold, the parameter coding processing is performed, and when the intermediate coefficient of a non-specific symbol is read, the coding processing is performed, so that the intermediate coefficients of different symbols are separately coded, which helps ensure coding performance of the attribute information of the point cloud.

In another implementation, the computer device determines a delay limit point number threshold according to the delay limit parameter, where the delay limit point number threshold is used to limit a number of to-be-coded points that are allowed to be delayed during coding. For a manner of determining the delay limit point number threshold, refer to the manner of determining the coding limit point number threshold in operation S401. In the process of run-length coding, the run-length used to count consecutive specific symbols is set, and the run-length is set to an initial value (for example, 0). In the process of sequentially reading the intermediate coefficients of the to-be-coded points from the cache, when the intermediate coefficient whose value is a specific symbol is read, the computer device increases the count value of the run-length by one step. When a number of to-be-coded points reaches the delay limit point number threshold, the computer device codes the current run-length, or codes the delay limit point number threshold and an intermediate coefficient of a to-be-coded point whose value is a specific symbol, and resets the run-length to the initial value for recount. When an intermediate coefficient of a to-be-coded point whose value is a non-specific symbol is read, the computer device codes the current run-length and the intermediate coefficient of the non-specific symbol, and resets the run-length to the initial value for recount.

For example, it is assumed that the number of intermediate coefficients for current delay is 58, the specific symbol is 0, and the number of to-be-coded points that are allowed to be delayed is 64. When the computer device reads that the value of the intermediate coefficient of the to-be-coded point is 0, the current run-length is 58+1=59, and the computer device continues to read the next intermediate coefficient. When the computer device reads that the value of the intermediate coefficient of the to-be-coded point is 1 (non-0), the computer device codes the current run-length (59) and the intermediate coefficient of the to-be-coded point with a value of 1, and resets the run-length to the initial value for recount.

In this embodiment, during the process of controlling the delay logic in the coding according to the delay limit parameter, when the intermediate coefficients of the to-be-coded points are read sequentially from the cache, the coding control is performed on the intermediate coefficients of different symbols through the run-length, when the number of to-be-coded points reaches the delay limit point number threshold, the parameter coding processing is performed, and when the intermediate coefficients of non-specific symbols are read, the coding processing is performed, so that the intermediate coefficients of different symbols are separately coded, which helps ensure coding performance of the attribute information of the point cloud.

In the above embodiment, the run-length in the run-length coding is less than or equal to the delay limit point number threshold. Based on this, the computer device can also set the number of bits of the run-length according to the delay limit point number threshold, thereby ensuring that the run-length does not exceed the delay limit point number threshold, and ensuring that the coding control can be performed on the intermediate coefficients of different symbols through the run-length, which helps ensure coding performance of the attribute information of the point cloud.

For example, it is assumed that the delay limit parameter is in unit of a number of points and is 1024 (that is, the delay limit point number is 1024). When the computer device uses run-length coding to code the residual of the attribute information of the to-be-coded point, the computer device counts the number of consecutive points being a specific symbol (for example, 0) in the residual of the attribute information of the to-be-coded points, and records the number as a run-length. When the residual of the attribute information of the current to-be-coded point is a specific symbol, the value of the run-length is increased by 1. Each time the value of the run-length reaches 1024, the computer device codes the value of the run-length and the residual of the attribute information of the current to-be-coded point, sets the run-length to the initial value (for example, 0), and recounts the run-length. When the residual of the attribute information of the current to-be-coded point is a non-specific symbol (for example, non-0), the computer device codes the current value of the run-length and the residual of the attribute information of the current to-be-coded point, sets the run-length to an initial value (for example, 0), and recounts the run-length.

S405: Code the attribute information of the first point, and control coding logic in the coding according to the cache limit parameter and the delay limit parameter.

The cache limit parameter and the delay limit parameter are used to perform delay control on the number of to-be-coded points, so that the coding process of the attribute information of the to-be-coded point is controllable, which can avoid an excessively long waiting time for point cloud coding, thereby improving the coding performance of the attribute information of the point cloud. In an implementation, the cache limit parameter and the delay limit parameter are independent of each other. Taking the intermediate coefficient of the attribute information of the to-be-coded point as the transform coefficient as an example, the computer device first controls the cache logic in the coding according to the cache limit parameter. For a specific implementation, refer to the implementation of operation S403. When coding is performed in unit of a group, after caching the intermediate coefficients of the point cloud group, the computer device can arrange the intermediate coefficients of the point cloud group and write the arrangement manner to the coded code stream; or directly specify the arrangement manner to the decoding device. The computing device clears the cache and repeats the above operations until the intermediate coefficients of all point cloud groups are coded. During the coding process, the computer device determines the run-length during run-length coding according to the delay limit parameter, and controls the coding logic in the coding based on the run-length. For a specific implementation, refer to the implementation of operation S404.

For example, it is assumed that the cache limit parameter and the delay limit parameter are both set in unit of a number of points, the cache limit parameter is 1024, the delay limit parameter is 2048, and coding is performed in unit of a group. The computer device counts the number of to-be-coded points included in each to-be-coded point cloud group in the cache, and determines the number M of groups based on the cache limit parameter and the number of to-be-coded points included in each to-be-coded point cloud group in the cache. M is a positive integer, the total number of to-be-coded points included in the M to-be-coded point cloud groups is less than or equal to 1024, and the total number of to-be-coded points included in the M+1 to-be-coded point cloud groups is greater than 1024. The computer device arranges the transform coefficients in the M to-be-coded point cloud groups one by one (for example, in a fixed arrangement manner, a random arrangement manner, or a specified arrangement manner). After obtaining the transform coefficients in the M to-be-coded point cloud groups, the computer device clears the current cache and restarts caching the transform coefficients of the to-be-coded groups, until the transform coefficients in all the point cloud groups are coded. In a specific implementation process, the transform coefficient of each point cloud group includes one first transform coefficient DC and at least one second transform coefficient {AC}. The arrangement manner of the transform coefficients is limited by the computer device (the coding device). For example, for the transform coefficients of points of an even number of cache limit parameters, or in other words, the number of point cloud groups in the cache is an even number, arrangement is [DC1, ..., DCM, {AC1}, ..., {ACM}]. For transform coefficients of points of an odd number of cache limit parameters, or in other words, the number of point cloud groups in the cache is an odd number, arrangement is [{AC1}, ..., {ACM}, DC1, ..., DCM]. During the coding process, the computer device can use run-length coding to code the residual of the attribute information of the to-be-coded point, count the number of consecutive points being a specific symbol in the residual of the attribute information of the to-be-coded point, and record the number as the run-length. When the symbol of the residual of the attribute information of the current to-be-coded point is a specific value (for example, 0), the value of the run-length is increased by 1. Each time the run-length reaches the delay limit point number indicated by the delay limit parameter, the value of the run-length and the residual of the attribute information of the current to-be-coded point are coded, the run-length is set to 0, and recount is performed. When the symbol of the residual of the attribute information of the current to-be-coded point is a non-specific value (for example, non-0), the computer device first codes the value of the run-length, and then codes the residual of the attribute information of the current to-be-coded point, and sets the run-length to 0 and recounts.

In another implementation, the cache limit parameter and the delay limit parameter are correlated with each other. That is, the cache limit parameter is determined based on the delay limit parameter, or the delay limit parameter is determined based on the cache limit parameter. Taking the intermediate coefficient of the attribute information of the to-be-coded point as the transform coefficient as an example, after determining the cache limit parameter and the delay limit parameter based on the correlation, the computer device controls the cache logic in the coding according to the cache limit parameter. For a specific implementation, refer to the implementation of operation S403. When coding is performed in unit of a group, after caching the intermediate coefficients of the point cloud group, the computer device can arrange the intermediate coefficients of the point cloud group and write the arrangement manner to the coded code stream; or directly specify the arrangement manner to the decoding device. The computing device clears the cache and repeats the above operations until the intermediate coefficients of all point cloud groups are coded. During the coding process, the computer device determines the run-length during run-length coding according to the delay limit parameter, and controls the coding logic in the coding based on the run-length. For a specific implementation, refer to the implementation of operation S404.

For example, it is assumed that the delay limit parameter is in unit of a multiple and is 2, and the cache limit parameter is in unit of a number of groups and is 64. The cache limit point number determined based on the cache limit parameter is the total number of to-be-coded points in the 64 point cloud groups, and the delay limit point number determined based on the delay limit parameter is the total number of to-be-coded points in the 64* 2=128 point cloud groups. For another example, assuming that the cache limit parameter is in unit of a number of groups and is 64, and there are k second transform coefficients of the first point cloud group among the 64 point cloud groups, the delay limit parameter is in unit of a number of points and is 64+k, to ensure realtime decoding of the first point cloud group. When coding is performed in unit of a group, the computer equipment counts the number of to-be-coded points included in the 64 point cloud groups, and arranges the transform coefficients in the 64 to-be-coded point cloud groups one by one (for example, in a fixed arrangement manner, a random arrangement manner, or a specified arrangement manner). After obtaining the transform coefficients in the 64 to-be-coded point cloud groups, the computer device clears the current cache and restarts caching the transform coefficients of the to-be-coded groups, until the transform coefficients in all the point cloud groups are coded. In a specific implementation process, the transform coefficient of each point cloud group includes one first transform coefficient DC and at least one second transform coefficient {AC}. The arrangement manner of the transform coefficients is limited by the computer device (the coding device). For example, for the transform coefficients of points of the even number of cache limit parameters, or in other words, the number of point cloud groups in the cache is an even number, arrangement is [DC1, ..., DCM, {AC1}, ..., f ACM}]. For transform coefficients of points of the odd number of cache limit parameters, or in other words, the number of point cloud groups in the cache is an odd number, arrangement is [{AC1}, ..., {ACM}, DC1, ..., DCM]. During the coding process, the computer device can use run-length coding to code the residuals of the attribute information of the to-be-coded point, count the number of consecutive points being a specific symbol in the residual of the attribute information of the to-be-coded points, and record the number as the run-length. When the symbol of the residual of the attribute information of the current to-be-coded point is a specific value (for example, 0), the value of the run-length is increased by 1. Each time the run-length reaches the delay threshold indicated by the delay limit parameter, the value of the run-length and the residual of the attribute information of the current to-be-coded point are coded, the run-length is set to 0, and recount is performed. When the symbol of the residual of the attribute information of the current to-be-coded point is a non-specific value (for example, non-0), the computer device first codes the value of the run-length, and then codes the residual of the attribute information of the current to-be-coded point, and sets the run-length to 0 and recounts.

Based on the embodiment of FIG. 3, in this embodiment of this disclosure, on the one hand, the coding process of the attribute information of the point cloud is controlled by using at least one of the cache limit parameter or the delay limit parameter. On the other hand, multiple to-be-coded points are supported, or the attribute information of multiple to-be-coded point cloud groups is arranged according to a preset arrangement manner, which improves the coding performance of the attribute information of the point cloud.

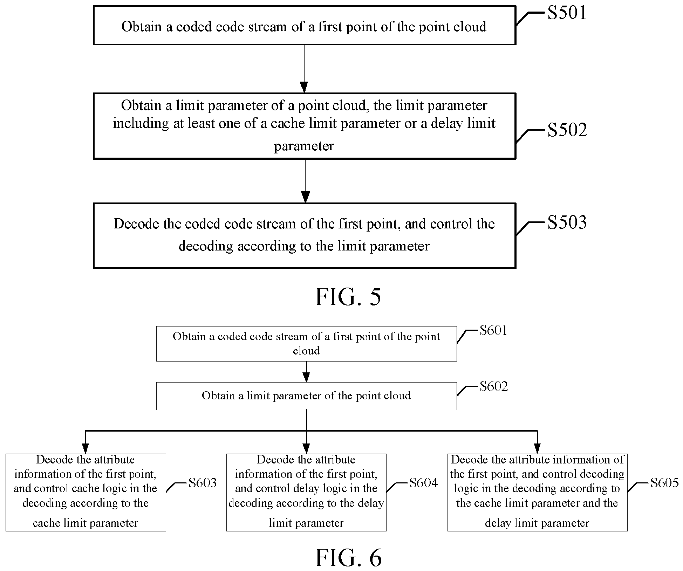

FIG. 5 shows another point cloud processing method according to some embodiments. The point cloud processing method can be executed by a computer device. Specifically, the computer device can be the decoding device 202 in the point cloud processing system 20 shown in FIG. 2. As shown in FIG. 5, the point cloud processing method may include the following operation S501 to operation S503:

S501: Obtain a coded code stream of a first point of the point cloud.

The coded code stream of the to-be-decoded point is obtained by coding a to-be-coded point by a coding device. For details, refer to the embodiments in FIG. 3 and FIG. 4. The coded code stream of the to-be-decoded point in the point cloud may be obtained by a computer device from the coding device in real time, or may be obtained by the computer device from downloaded coded code streams.

S502: Obtain a limit parameter of a point cloud, the limit parameter including at least one of a cache limit parameter or a delay limit parameter.

The obtaining the limit parameter of the point cloud by the computer device includes any one or more of the following: parsing, from the coded code stream, to obtain the limit parameter that has been set to a fixed value; parsing, from the coded code stream, to obtain the limit parameter that has been set to a variable value; and parsing, from the coded code stream, to obtain a dynamically adjusted limit parameter that has been set. When the limit parameter of the point cloud is not obtained through parsing from the coded code stream, the computer device determines that the limit parameter of the point cloud is a default value. Various setting manners are used to limit the limit parameter, and the decoding delay can be flexibly controlled according to actual needs, thereby ensuring the decoding performance of attribute information of the point cloud in various scenarios.

In an implementation, when the limit parameter includes only one type of parameter, a unit of the limit parameter includes any one of the following: a unit of a number of points and a unit of a number of groups. Limiting in unit of a number of points means limiting the number of to-be-decoded points when decoding in unit of a number of points. Limiting in unit of a number of groups means limiting the number of to-be-decoded groups when decoding in unit of a number of groups. When the limit parameter is a cache limit parameter, the decoding limit point number threshold is a cache limit point number threshold. The unit of the cache limit parameter can be a number of points or a number of groups. Similarly, when the limit parameter is a delay limit parameter, the decoding limit point number threshold is a delay limit point number threshold. The unit of the delay limit parameter can be a number of points or a number of groups.

In another implementation, when the limit parameter includes two types of parameters, a unit of the limit parameter includes any one or more of the following: unit of a number of points, unit of a number of groups, and unit of a multiple relationship. A limit parameter 1 being in unit of a multiple refers to: when a limit parameter 2 limits the number of to-be-decoded points in unit of a number of points, the limit parameter 1 limits the number of to-be-decoded points in unit of a number of points, and the number of to-be-decoded points limited by the limit parameter 1 is a multiple of the number of to-be-decoded points limited by the limit parameter 2. When the limit parameter 2 limits the number of to-be-decoded groups in unit of a number of groups, the limit parameter 1 limits the number of to-be-decoded groups in unit of a number of groups, and the number of to-be-decoded groups limited by the limit parameter 1 is a multiple of the number of to-be-decoded groups limited by the limit parameter 2.

It can be known from the foregoing that a combination manner includes: the limit parameter 1 and the limit parameter 2 are both in unit of a number of points or in unit of a number of groups; the limit parameter 1 is in unit of a number of points, and the limit parameter 2 is in unit of a number of groups, or the limit parameter 2 is in unit of a multiple; and the limit parameter 1 is in unit of a number of groups, and the limit parameter 2 is in unit of a number of points, or the limit parameter 2 is in unit of a multiple. The limit parameter 1 may be any one of the cache limit parameter and the delay limit parameter, and the limit parameter 2 may be the other one of the cache limit parameter and the delay limit parameter. The limit parameter includes the number of parameter types, and the corresponding units are flexibly set, so that the decoding delay can be flexibly controlled according to actual needs, thereby ensuring the decoding performance of the attribute information of the point cloud in various scenarios.

S503: Decode the coded code stream of the first point, and control the decoding according to the limit parameter.

The decoding scheme includes run-length decoding. When the coding device codes in unit of a number of points, the computer device decodes in unit of a number of points. When the coding device codes in unit of a number of groups, the computer device decodes in unit of a number of groups. The limit parameter may include at least one of a cache limit parameter and a delay limit parameter.

In implementation 1, an implementation of the computer device controlling the decoding process according to the limit parameter is: determining a limit point number threshold according to the limit parameter, where the limit point number threshold is used to limit a number of to-be-decoded points. For example, when the limit parameter is a cache limit parameter, the computer device determines, according to the cache limit parameter, a threshold number of to-be-decoded points that are allowed to be cached in the cache. When the limit parameter is a delay limit parameter, the computer device determines, according to the delay limit parameter, a threshold number of to-be-decoded points that are allowed to be delayed in the decoding. During run-length decoding, when the computer device reads a limit flag bit, a count value of a first run-length is set to a preset value (for example, the limit point number threshold). When the count value of the first run-length is greater than zero and is not equal to the limit point number threshold, the computer device sets the intermediate coefficient of the current to-be-decoded point to a specific value (for example, 0), and reduces the count value of the first run-length by one step, until the count value of the first run-length is equal to zero. The computer device obtains the intermediate coefficient of the to-be-decoded point that is read when the count value of the first run-length is equal to zero, and performs decoding. In this embodiment, during the run-length decoding process, the first run-length is used to control the decoding according to the limit point number threshold, which can ensure the coding and decoding performance of the attribute information of the point cloud.

In implementation 2, an implementation of the computer device controlling the decoding process according to the limit parameter is: determining a limit point number threshold according to the limit parameter, where the limit point number threshold is used to limit a number of to-be-decoded points. A count value of a first run-length is read from the coded code stream during the run-length decoding; when the count value of the first run-length is greater than zero and equal to the limit point number threshold, the computer device sets the intermediate coefficient of the current to-be-decoded point to a specific value, and reduces the count value of the first run-length by one step, until the count value of the first run-length is equal to zero; reads a count value of a second run-length from the coded code stream; and when the count value of the second run-length is greater than zero and not equal to the limit point number threshold, sets the intermediate coefficient of the current to-be-decoded point to a preset value, and reduces the count value of the second run-length by one step, until the count value of the second run-length is equal to zero; obtains the intermediate coefficient of the to-be-decoded point that is read when the count value of the second run-length is equal to zero, and performs decoding. The second run-length is a next run-length of the first run-length. When the count value of the second run-length is greater than zero and equal to the limit point number threshold, the computer device sets the intermediate coefficient of the current to-be-decoded point to a specific value, and reduces the count value of the second run-length by one step, until the count value of the second run-length is equal to zero; and reads a count value of a third run-length from the coded code stream and continues to make judgment. That is, when the count value of the read run-length is greater than zero and equal to the limit point number threshold, when the count value of the run-length is 0, the computer device continues to read the count value of the next run-length. When the count value of the read run-length is greater than zero and not equal to the limit point number threshold, when the count value of the run-length is 0, the computer device obtains the intermediate coefficient of the to-be-decoded point that is read when the count value of the run-length is equal to zero, and performs decoding. In this embodiment, during the run-length decoding process, the first run-length and the second run-length are used to control the decoding according to the limit point number threshold, which can ensure the coding and decoding performance of the attribute information of the point cloud.

In implementation 3, during the run-length decoding process, the computer device reads the count value of the first run-length from the coded code stream. When the count value of the first run-length is greater than zero, the computer device sets the intermediate coefficient of the current to-be-decoded point to a specific value, and reduces the count value of the first run-length by one step, until the count value of the first run-length is equal to zero; obtains the intermediate coefficient of the to-be-decoded point that is read when the count value of the first run-length is equal to zero, and performs decoding. In this implementation, the intermediate coefficient of the to-be-decoded point that is read when the count value of the first run-length is equal to zero may be a specific value. In a possible implementation, the intermediate coefficients whose values are the specific value may be accumulated in multiple run-lengths. In this embodiment, during the run-length decoding process, the intermediate coefficients read when the count value is 0 are decoded, which can ensure the coding and decoding performance of the attribute information of the point cloud.

In the coding scheme in unit of a group, the decoding process is similar to the above implementation 1 to implementation 3. The difference is that when the limit parameter is a cache limit parameter, after caching the read intermediate parameters of the point cloud groups, the computer device can also arrange the intermediate coefficients of point cloud groups in the cache according to an obtained arrangement manner, and then decode according to the above implementation 1 to implementation 3.

In an implementation, the decoding scheme is in unit of a number of points, that is, a point in the point cloud is decoded as a basic decoding unit. A specific implementation of computer device decoding the coded code stream of the to-be-decoded point is: parsing the coded code stream of the to-be-decoded point to obtain the intermediate coefficient of the to-be-decoded point, where the intermediate coefficient includes a residual coefficient or a transform coefficient, and writing, by the computer device, the intermediate coefficient of the to-be-decoded point in the cache and reading the intermediate coefficient of the to-be-decoded point from the cache for decoding. During the decoding process, the computer device can control the decoding process based on the limit parameter. For example, the computer device may control the decoding process based on the delay limit parameter. For another example, the computer device may control the decoding process based on the cache limit parameter. For another example, the computer device may control the decoding process based on the cache limit parameter and the delay limit parameter. For a specific implementation of the computer device decoding the coded code stream, refer to the above implementation of point cloud decoding. In this embodiment, the attribute information of the to-be-decoded point is converted in unit of a number of points, and the obtained intermediate coefficient is written to the cache, so that the intermediate coefficient is read from the cache for decoding, which can control the delay of the point cloud coding process, avoid an excessively long waiting time for point cloud decoding, and help improve the coding and decoding performance of attribute information of the point cloud.

In another implementation, the decoding scheme is in unit of a number of groups, that is, a group in the point cloud is decoded as a basic decoding unit. A specific implementation of the computer device decoding the coded code stream of the to-be-decoded point is: parsing the coded code stream of the to-be-decoded point to obtain multiple point cloud groups, where each point cloud group includes the intermediate coefficient of the to-be-decoded point, and the intermediate coefficient includes a residual coefficient or a transform coefficient, and writing, by the computer device, the point cloud group to the cache, and sequentially reading the intermediate coefficients of the to-be-decoded points in the point cloud group from the cache for decoding. During the decoding process, the computer device can control the decoding process based on the limit parameter. For example, the computer device may control the decoding process based on the delay limit parameter. For another example, the computer device may control the decoding process based on the cache limit parameter. For another example, the computer device may control the decoding process based on the cache limit parameter and the delay limit parameter. For a specific implementation of the computer device decoding the coded code stream, refer to the above implementation of point cloud decoding. In this embodiment, the attribute information of the to-be-decoded point is converted in unit of a number of groups, and the obtained intermediate coefficient is written to the cache, so that the intermediate coefficient is read from the cache for decoding, which can control the delay of the point cloud coding process, avoid an excessively long waiting time for point cloud decoding, and help improve the coding and decoding performance of attribute information of the point cloud.

In this embodiment of this disclosure, when the to-be-decoded point in the point cloud needs to be decoded, the coded code stream of the to-be-decoded point in the point cloud and the limit parameter of the point cloud can be obtained, the coded code stream of the to-be-decoded point is decoded, and the decoding process is controlled according to the limit parameter. In this embodiment of this disclosure, the decoding process of attribute information of the to-be-decoded point is controllable by obtaining the limit parameter of the point cloud, thereby improving the decoding performance of the attribute information of the point cloud.

FIG. 6 shows another point cloud processing method according to some embodiments. The point cloud processing method can be executed by a computer device. Specifically, the computer device can be the decoding device 202 in the point cloud processing system 20 shown in FIG. 2. As shown in FIG. 5, the point cloud processing method may include the following operation S601 to operation S605:

S601: Obtain a coded code stream of a first point of the point cloud.

S602: Obtain a limit parameter of the point cloud.

For a specific implementation of operation S601 and operation S602, refer to the implementation of operation S501 and operation S502 in FIG. 5.

When the limit parameter is a cache limit parameter, operation S603 is performed. When the limit parameter is a delay limit parameter, operation S604 is performed. When the limit parameter includes a cache limit parameter and a delay limit parameter, operation S605 is performed.

S603: Decode the attribute information of the first point, and control cache logic in the decoding according to the cache limit parameter.

The cache limit parameter is used to control the number of to-be-decoded points that are allowed to be written to the cache, so that the decoding process of attribute information of the to-be-decoded point is controllable, which can avoid an excessively long waiting time for point cloud decoding, thereby improving the decoding performance of the attribute information of the point cloud. In an implementation, the cache limit parameter is used to limit the number of to-be-decoded points that are allowed to be written to the cache, and each to-be-decoded point may include one or more intermediate coefficients. The computer device determines a cache limit point number threshold according to the cache limit parameter. Each time the number of to-be-decoded points written to the cache reaches the cache limit point number threshold, the computer device reads the intermediate coefficient of the to-be-decoded point from the cache for decoding. In this embodiment, the cache limit point number threshold determined based on the cache limit parameter is used to control the number of to-be-decoded point that are allowed to be written to the cache. When the number of to-be-decoded points that are allowed to be written to the cache reaches the cache limit point number threshold, decoding is triggered, which can avoid an excessively long waiting time for point cloud decoding, thereby improving the decoding performance of the attribute information of the point cloud.

In an embodiment, the decoding scheme is in unit of a number of groups, that is, a group in the point cloud is decoded as a basic decoding unit. The computer device counts the total number of to-be-decoded points included in each point cloud group in the cache. When the number of groups stored in the cache is M, and the total number of to-be-decoded points included in the M point cloud groups reaches the cache limit point number threshold, the computer device reads the intermediate coefficient of the to-be-decoded point included in the M point cloud groups from the cache for decoding. Further, the computer device clears the cache and continues to write the intermediate coefficients of the to-be-decoded point to the cache. In this embodiment, when decoding in unit of a number of groups, the total number of to-be-decoded points in all point cloud groups is controlled by the cache limit point number threshold, to perform delay control on the decoding process of the attribute information of the to-be-decoded point, which helps improve decoding performance of the attribute information of the point cloud.

In another embodiment, the decoding scheme is in unit of a number of groups, that is, a group in the point cloud is decoded as a basic decoding unit. The computer device counts the total number of target to-be-decoded points included in each point cloud group in the cache. The number of target to-be-decoded points in each point cloud group is less than or equal to the point number limit threshold of each point cloud group. When the cache includes M point cloud groups, and the total number of target to-be-decoded points included in the M point cloud groups reaches the cache limit point number threshold, the computer device controls to read the intermediate coefficients of the to-be-decoded points included in the M point cloud groups from the cache for decoding. Further, the computer device clears the cache and continues to write the intermediate coefficient of the to-be-decoded point to the cache. In this embodiment, when decoding in unit of a number of groups, the number of to-be-decoded points in each point cloud group is controlled by the point number limit threshold, and the total number of to-be-decoded points in all point cloud groups is controlled by the cache limit point number threshold, to perform delay control on the decoding process of the attribute information of the to-be-decoded point, which helps improve decoding performance of the attribute information of the point cloud.

In another implementation, the decoding scheme is in unit of a number of groups, that is, a group (a group may include at least one point in the point cloud) in the point cloud is decoded as a basic decoding unit. The computer device counts the number M of point cloud groups included in the cache, and calculates, based on M and the point number limit threshold of the point cloud group, the total number of to-be-decoded points included in the cache. For example, assuming M=64 and the point number limit threshold is 8, the total number of to-be-decoded points included in the cache is 64*8=512. When the total number of to-be-decoded points included in the cache reaches the cache limit point number threshold, the computer device controls to read the intermediate coefficients of the to-be-decoded points included in the M point cloud groups from the cache for decoding. Further, the computer device clears the cache and continues to write the intermediate coefficient of the to-be-decoded point to the cache. In this embodiment, when decoding in unit of a number of groups, delay control is performed, based on the group number threshold, on the number of point cloud groups allowed to be written to the cache, which helps improve the decoding performance of the attribute information of the point cloud.

In an embodiment, during the decoding process, the computer device may also obtain a preset arrangement manner of point cloud groups in the cache. The preset arrangement manner includes any one of the following: a fixed arrangement manner and a dynamic arrangement manner. The fixed arrangement manner means that an arrangement manner of intermediate coefficients of the point cloud groups cached each time is the same (for example, according to similarity, or according to the number of to-be-coded points included in the group), and the dynamic arrangement manner means that an arrangement manner of intermediate coefficients of the point cloud groups in the cache changes. For example, the arrangement manner of the intermediate coefficients of the point cloud group cached for the first time is the same as the arrangement manner of the intermediate coefficients of the point cloud group cached for the second time, and the arrangement manner of the intermediate coefficients of the point cloud group cached for the third time is different. In this embodiment, the point cloud groups written to the cache are arranged in either a fixed arrangement manner or a dynamic arrangement manner, which can ensure the orderly decoding of the point cloud and help improve the decoding processing efficiency of the decoded code stream. A specific implementation of the computer device obtaining the preset arrangement manner of the point cloud groups in the cache is: each arrangement corresponds to an index value, and the computer device can parse to obtain the index value from the coded code stream and determine the arrangement manner of the point cloud groups based on the index value. In this embodiment, by writing the index value corresponding to the arrangement manner of the intermediate coefficients of the point cloud group in the decoded code stream, it is convenient to decode the decoded code stream based on the index value, which helps improve the decoding processing efficiency of the decoded code stream.

S604: Decode the attribute information of the first point, and control delay logic in the decoding according to the delay limit parameter.

For a specific implementation of operation S604, refer to the implementation of operation S503 shown in FIG. 5. The delay limit parameter is used to perform delay control on the number of to-be-decoded points, so that the decoding process of attribute information of the to-be-decoded point is controllable, which can avoid an excessively long waiting time for point cloud decoding, thereby improving the decoding performance of the attribute information of the point cloud.

S605: Decode the attribute information of the first point, and control decoding logic in the decoding according to the cache limit parameter and the delay limit parameter.

The cache limit parameter and the delay limit parameter are used to perform delay control on the number of to-be-decoded points, so that the decoding process of attribute information of the to-be-decoded point is controllable, which can avoid an excessively long waiting time for point cloud coding, thereby improving the decoding performance of the attribute information of the point cloud. In an implementation, the cache limit parameter and the delay limit parameter are independent of each other. The computer device first reads the intermediate parameter of the to-be-decoded point or the intermediate parameter of the point cloud group into the cache according to the delay limit parameter. For a specific implementation, refer to the implementation of operation S604. When the coding device codes in unit of a group, after caching the read intermediate parameters of the point cloud groups, the computer device can also arrange the intermediate coefficients of the point cloud groups in the cache according to the obtained arrangement manner. The computer device can then control the decoding logic in the decoding according to the delay limit parameter. For a specific implementation, refer to the implementation of operation S503.

In another implementation, the cache limit parameter and the delay limit parameter are correlated with each other. That is, the cache limit parameter is determined based on the delay limit parameter, or the delay limit parameter is determined based on the cache limit parameter. The computer device first reads the intermediate parameter of the to-be-decoded point or the intermediate parameter of the point cloud group into the cache according to the delay limit parameter. For a specific implementation, refer to the implementation of operation S604. When the coding device codes in unit of a group, after caching the read intermediate parameters of the point cloud groups, the computer device can also arrange the intermediate coefficients of the point cloud groups in the cache according to the obtained arrangement manner. The computer device can then control the decoding logic in the decoding according to the delay limit parameter. For a specific implementation, refer to the implementation of operation S503.

Based on the embodiment of FIG. 5, in this embodiment of this disclosure, on the one hand, the decoding process of the attribute information of the point cloud is controlled by using at least one of the cache limit parameter or the delay limit parameter. On the other hand, multiple to-be-decoded points are supported, or the attribute information of multiple to-be-decoded point cloud groups is arranged according to the arrangement manner indicated by the coded code stream, which improves the decoding performance of the attribute information of the point cloud.

The above provides a detailed description of the methods of some embodiments. In order to facilitate the better implementation of the above solution of some embodiments, an apparatus of some embodiments is correspondingly provided below.

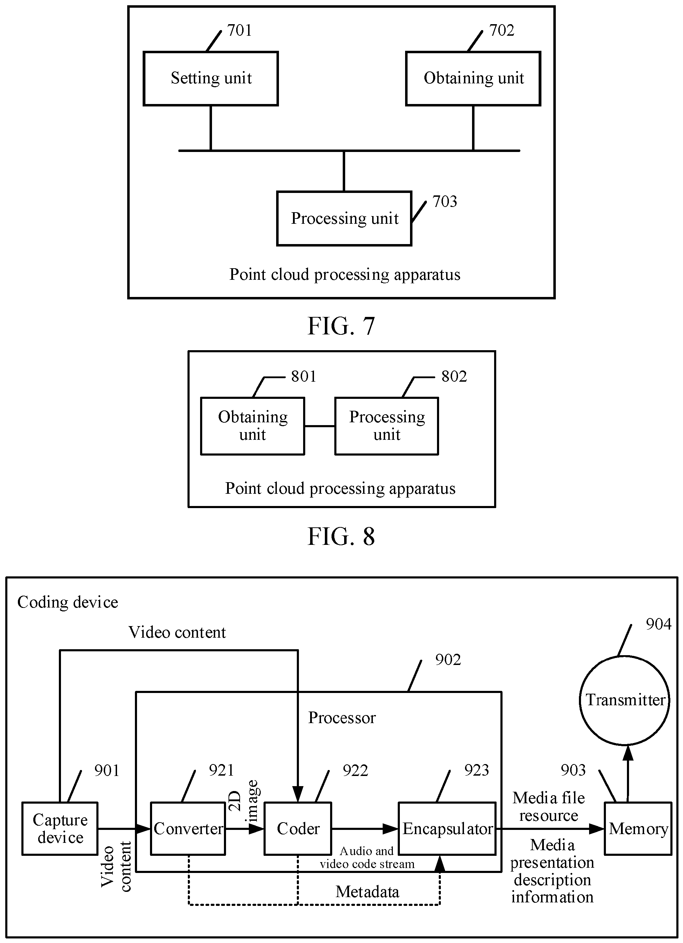

FIG. 7 is a schematic structural diagram of a point cloud processing apparatus according to some embodiments. The point cloud processing apparatus may be a computer-readable instruction (including program code) running in a coding device. For example, the point cloud processing apparatus may be application software in the coding device. As shown in FIG. 7, the point cloud processing apparatus includes a setting unit 701, an obtaining unit 702, and a processing unit 703. Referring to FIG. 7, detailed description of each unit is as follows:

The setting unit 701 is configured to set a limit parameter of a point cloud, the limit parameter including at least one of a cache limit parameter or a delay limit parameter.

The obtaining unit 702 is configured to obtain attribute information of a first point of the point cloud.

The processing unit 703 is configured to code the attribute information of the first point; and control the coding according to the limit parameter.

In an implementation, the coding the attribute information of the first point is based on a coding scheme in unit of a number of points, the processing unit 703 is specifically configured to: convert the attribute information of the first point, to obtain a first intermediate coefficient of the first point; wherein the intermediate coefficient comprises a residual coefficient or a transform coefficient; write the first intermediate coefficient to a cache; and read the first intermediate coefficient from the cache for coding.

In an implementation, the coding the attribute information of the first point is based on a coding scheme in unit of a number of groups, the processing unit 703 is specifically configured to: group attribute information of a plurality of to-be-coded points, to obtain a first plurality of point cloud groups; convert attribute information of a second point of a point cloud group to be coded, to obtain a converted point cloud group; write the converted point cloud group to a cache; and sequentially read a second intermediate coefficient of the second point from the cache for coding, wherein the second intermediate coefficient comprises a residual coefficient or a transform coefficient.

In an implementation, the limit parameter includes a cache limit parameter; and when controlling the coding process according to the limit parameter, the processing unit 703 is specifically configured to: control cache logic in the coding according to the cache limit parameter.

In an implementation, when controlling cache logic in the coding according to the cache limit parameter, the processing unit 703 is specifically configured to: determine a cache limit point number threshold according to the cache limit parameter that limits a number of to-be-coded points to be written to the cache; and read the second intermediate coefficient from the cache for coding based on the number of to-be-coded points written to the cache reaching the cache limit point number threshold.

In an implementation, when reading the second intermediate coefficient from the cache for coding based on the number of to-be-coded points written to the cache reaching the cache limit point number threshold, the processing unit 703 is specifically configured to: count a first total number of points of at least one point cloud group written to the cache for coding, and based on a second number of point cloud groups being written to the cache and the first total number reaching the cache limit point number threshold, read a third intermediate coefficient of a third point of the at least one point cloud group from the cache for coding; or count a third number of the at least one point cloud group written to the cache, calculate a fourth total number of points written to the cache based on the third number and a point number limit threshold of the at least one point cloud group, and based on the fourth total number reaching the cache limit point number threshold, read a fourth intermediate coefficient of a fourth point of the at least one point cloud group from the cache for coding.

In an implementation, a coding scheme of the coding includes a coding scheme in unit of a number of groups; and when controlling cache logic in the coding according to the cache limit parameter, the processing unit 703 is specifically configured to: determine, according to the cache limit parameter, a number of point cloud groups to be written to the cache; and based on a fifth number of point cloud groups written to the cache reaching the number of point cloud groups, read, from the cache for coding, the second intermediate coefficient.

In an implementation, the processing unit 703 is further configured to: arrange, according to a preset arrangement manner, a second plurality of point cloud groups written to the cache, wherein the preset arrangement manner comprises a fixed arrangement manner or a dynamic arrangement manner, wherein a first arrangement manner of intermediate coefficients of the second plurality of point cloud groups is fixed based on the fixed arrangement manner, and wherein a second arrangement manner of intermediate coefficients of the second plurality of point cloud groups is not fixed based on the dynamic arrangement manner.

In an implementation, the preset arrangement manner corresponds to an index value; and the processing unit 703 is further configured to: write a first index value corresponding to the preset arrangement manner in a coded code stream formed by the coding.

In an implementation, the coding includes run-length coding; and when controlling cache logic in the coding according to the cache limit parameter, the processing unit 703 is specifically configured to: determine, according to the cache limit parameter, a cache limit point number threshold limiting a number of to-be-coded points to be written to the cache; set, during the run-length coding, a first run-length used to count consecutive first type of symbols; set the first run-length to an initial value; and sequentially read a plurality of intermediate coefficients of a plurality of to-be-coded points from the cache, wherein: based on a fifth intermediate coefficient whose value is a first type of symbol being read, increase a count value of the first run-length by one step; based on a first number of to-be-coded points that are read being equal to the cache limit point number threshold, code a current run-length, or code the cache limit point number threshold and a sixth intermediate coefficient of a sixth to-be-coded point whose value is the first type of symbol, and setting the first run-length to the initial value for recount; and based on a seventh intermediate coefficient of a seventh to-be-coded point whose value is a second type of symbol being read, code the current run-length and the seventh intermediate coefficient of the second type of symbol, and reset the first run-length to the initial value for recount.

In an implementation, the limit parameter includes a delay limit parameter; and when controlling the coding process according to the limit parameter, the processing unit 703 is specifically configured to: control delay logic in the coding according to the delay limit parameter.

In an implementation, the coding includes run-length coding; and when controlling delay logic in the coding according to the delay limit parameter, the processing unit 703 is specifically configured to: determine according to the delay limit parameter, a delay limit point number threshold limiting a number of to-be-coded points that are allowed to be delayed during coding; set, during the run-length coding, a second run-length used to count consecutive third type of symbols; set the second run-length to an initial value; and sequentially read a plurality of intermediate coefficients of a plurality of to-be-coded points from the cache, wherein: based on an eighth intermediate coefficient whose value is a third type of symbol being read, increase a count value of the second run-length by one step; based on the count value of the second run-length being equal to the delay limit point number threshold, perform parameter coding processing, and set the second run-length to the initial value for recount; based on a ninth intermediate coefficient of a eighth to-be-coded point whose value is a second type of symbol being read, code the current run-length and the ninth intermediate coefficient of the second type of symbol, and reset the second run-length to the initial value for recount; wherein the parameter coding processing refers to: coding the current run-length; or coding a limit identifier, wherein the limit identifier is configured for setting a run-length to a preset value; or coding the delay limit point number threshold and the eighth intermediate coefficient.

In an implementation, the coding includes run-length coding; and when controlling delay logic in the coding according to the delay limit parameter, the processing unit 703 is specifically configured to: determine, according to the delay limit parameter, a delay limit point number threshold limiting a number of to-be-coded points that are allowed to be delayed during coding; set, during the run-length coding, a second run-length used to count consecutive third type of symbols; set the second run-length to an initial value; and sequentially read a plurality of intermediate coefficients of a plurality of to-be-coded points from the cache, wherein: based on an eighth intermediate coefficient whose value is a third type of symbol being read, increase a count value of the second run-length by one step; based on the count value of the second run-length being equal to the delay limit point number threshold, code the current run-length, or coding the delay limit point number threshold and the eighth intermediate coefficient, and set the second run-length to the initial value for recount; based on a ninth intermediate coefficient of a eighth to-be-coded point whose value is a second type of symbol being read, code the current run-length and the ninth intermediate coefficient of the second type of symbol, and reset the second run-length to the initial value for recount.

In an implementation, the delay limit parameter is configured for determining the delay limit point number threshold; the coding includes run-length coding, and the run-length in the run-length coding is less than or equal to the delay limit point number threshold; and the processing unit 703 is further configured to: setting a number of bits of the run-length according to the delay limit point number threshold.

In an implementation, the limit parameter includes a cache limit parameter and a delay limit parameter; and when controlling the coding process according to the limit parameter, the processing unit 703 is specifically configured to: control coding logic in the coding according to the cache limit parameter and the delay limit parameter.

In an implementation, a setting manner of the limit parameter includes any one or more of the following: setting the limit parameter to a default value; setting the limit parameter to a fixed value, and encapsulating the set limit parameter into the coded code stream formed by the coding; setting the limit parameter to a variable value, and encapsulating the set limit parameter into the coded code stream formed by the coding; and dynamically adjusting the value of the limit parameter during the coding process, and encapsulating the dynamically adjusted limit parameter into the coded code stream formed by the coding.

In an implementation, when the limit parameter includes only one type of parameter, a unit of the limit parameter includes any one of the following: a unit of a number of points and a unit of a number of groups; and when the limit parameter includes two types of parameters, the unit of the limit parameter includes any one or more of the following: unit of a number of points, unit of a number of groups, and unit of a multiple relationship.

In an implementation, the limit parameter is configured for determining a coding limit point number threshold; when the limit parameter is a cache limit parameter, the coding limit point number threshold is a cache limit point number threshold; when the limit parameter is a delay limit parameter, the coding limit point number threshold is a delay limit point number threshold; when the limit parameter is in unit of a number of points and the value of the limit parameter is X1, the coding limit point number threshold is a total number of intermediate coefficients of X1 to-be-coded points; when the limit parameter is in unit of a number of groups and the value of the limit parameter is X2, the coding limit point number threshold is a total number of intermediate coefficients of to-be-coded points in X2 point cloud groups; and when the limit parameter is in unit of a number of groups, the value of the limit parameter is X3, and a number of points in each point cloud group is limited to X4, the coding limit point number threshold is a total number of intermediate coefficients of to-be-coded points in X3 point cloud groups, where the total number does not exceed the value of X3 *X4.

In an implementation, the limit parameter includes two types of parameters: a cache limit parameter and a delay limit parameter; the cache limit parameter is configured for determining a cache limit point number threshold; the delay limit parameter is configured for determining the delay limit point number threshold; when the cache limit parameter is in unit of a multiple relationship and the value of the cache limit parameter is Y1, the cache limit point number threshold is Y1 times the delay limit point number threshold; and when the delay limit parameter is in unit of a multiple relationship and the value of the delay limit parameter is Y2, the delay limit point number threshold is Y2 times the cache limit point number threshold.

According to some embodiments, some of the operations involved in the point cloud processing methods shown in FIG. 3 and FIG. 4 may be performed by various units in the point cloud processing apparatus shown in FIG. 7. For example, operation S301 shown in FIG. 3 can be executed by the setting unit 701 shown in FIG. 7, operation S302 can be executed by the obtaining unit 702 shown in FIG. 7, and operation S303 can be executed by the processing unit 703 shown in FIG. 7. Operation S401 shown in FIG. 4 can be executed by the setting unit 701 shown in FIG. 7, operation S402 can be executed by the obtaining unit 702 shown in FIG. 7, and operation S403 to operation S405 can be executed by the processing unit 703 shown in FIG. 7. The units of the point cloud processing apparatus shown in FIG. 7 may be separately or wholly combined into one or several other units, or one (or more) of the units herein may further be divided into multiple units of smaller functions. In this way, same operations can be implemented, and implementation of the technical effects of some embodiments is not affected. The foregoing units are divided based on logical functions. In an actual application, a function of one unit may be implemented by multiple units, or functions of multiple units are implemented by one unit. In another embodiment of this disclosure, the point cloud processing apparatus may also include another unit. During practical application, these functions may also be cooperatively implemented by another unit and may be cooperatively implemented by multiple units.

According to another embodiment of this disclosure, a computer-readable instruction (including program code) that can perform operations of the corresponding methods shown in FIG. 3 and FIG. 4 may be run on a general computing apparatus, for example, a computer, that includes a processing element and a storage element such as a central processing unit (CPU), a random access memory (RAM), and a read-only memory (ROM), to construct the point cloud processing apparatus shown in FIG. 7, and to implement the point cloud processing method according to some embodiments. The computer-readable instruction may be recorded in, for example, a computer-readable recording medium, and may be loaded into the foregoing computing apparatus by using the computer-readable recording medium, and run in the computing apparatus.

Based on the same inventive concept, the principles and beneficial effects for solving problems in the point cloud processing apparatus provided in some embodiments are similar to the principles and beneficial effects for solving problems in the point cloud processing method in the method embodiments of this disclosure. Refer to the principles and beneficial effects of implementation of the method and details will not be repeated here.

FIG. 8 is a schematic structural diagram of another point cloud processing apparatus according to some embodiments. The point cloud processing apparatus may be a computer-readable instruction (including program code) running in a decoding device. For example, the point cloud processing apparatus may be application software in the decoding device. As shown in FIG. 8, the point cloud processing apparatus includes an obtaining unit 801 and a processing unit 802. Referring to FIG. 8, detailed description of each unit is as follows:

The obtaining unit 801 is configured to obtain a coded code stream of a first point of a point cloud, and obtain a limit parameter of the point cloud, the limit parameter comprising at least one of a cache limit parameter or a delay limit parameter.

The processing unit 802 is configured to decode the coded code stream of the first point; and control the decoding according to the limit parameter.

In an implementation, the obtaining unit 801 obtaining a limit parameter of the point cloud includes any one or more of the following: setting the limit parameter to a default value; parsing, from the coded code stream, to obtain the limit parameter that has been set to a fixed value; parsing, from the coded code stream, to obtain the limit parameter that has been set to a variable value; and parsing, from the coded code stream, to obtain a dynamically adjusted limit parameter that has been set.

In an implementation, the decoding the coded code stream of the first point is based on a decoding scheme in unit of a number of points, the processing unit 802 is specifically configured to: parse the coded code stream of the first point to obtain a first intermediate coefficient of the first point; wherein the intermediate coefficient comprises a residual coefficient or a transform coefficient; write the first intermediate coefficient to a cache; and read the first intermediate coefficient from the cache for decoding.

In an implementation, the decoding the coded code stream of the first point is based on a decoding scheme in unit of a number of groups, the processing unit 802 is specifically configured to: parse the coded code stream of a plurality of to-be-decoded points, to obtain a first plurality of point cloud groups; write a point cloud group to the cache; and sequentially read a second intermediate coefficient of a second point in the point cloud group from the cache for decoding, wherein the second intermediate coefficient comprises a residual coefficient or a transform coefficient.

In an implementation, the decoding includes run-length decoding; and when controlling the decoding process according to the limit parameter, the processing unit 802 is specifically configured to: determine a limit point number threshold according to the limit parameter, where the limit point number threshold is used to limit a number of to-be-decoded points; when a limit flag bit is read during run-length decoding, set a count value of a first run-length to a preset value; when the count value of the first run-length is greater than zero and not equal to the limit point number threshold, set an intermediate coefficient of a current to-be-decoded point to a first value, and reduce the count value of the first run-length by one step, until the count value of the first run-length is equal to zero; and obtain a third intermediate coefficient of a third point that is read when the count value of the first run-length is equal to zero, and decode the third intermediate coefficient.

In an implementation, the decoding includes run-length decoding; and when controlling the decoding process according to the limit parameter, the processing unit 802 is specifically configured to: determine a limit point number threshold according to the limit parameter, where the limit point number threshold is used to limit a number of to-be-decoded points; read a count value of a first run-length from the coded code stream during the run-length decoding; when the count value of the first run-length is greater than zero and equal to the limit point number threshold, set an intermediate coefficient of a current to-be-decoded point to a first value, and reduce the count value of the first run-length by one step, until the count value of the first run-length is equal to zero; read a count value of a second run-length from the coded code stream; and when the count value of the second run-length is greater than zero and not equal to the limit point number threshold, set an intermediate coefficient of a current to-be-decoded point to a second value, and reduce the count value of the second run-length by one step, until the count value of the second run-length is equal to zero; and obtain a third intermediate coefficient of a third point that is read when the count value of the second run-length is equal to zero, and decode the third intermediate coefficient.

In an implementation, the decoding includes run-length decoding; and when controlling the decoding process according to the limit parameter, the processing unit 802 is specifically configured to: read a count value of a first run-length from the coded code stream during the run-length decoding; when the count value of the first run-length is greater than zero, set an intermediate coefficient of a current to-be-decoded point to a first value, and reduce the count value of the first run-length by one step, until the count value of the first run-length is equal to zero; and obtain a third intermediate coefficient of a third point that is read when the count value of the first run-length is equal to zero, and decode the third intermediate coefficient.

In an implementation, the limit parameter includes a cache limit parameter; and when controlling the decoding process according to the limit parameter, the processing unit 802 is specifically configured to: control cache logic in the decoding according to the cache limit parameter.

In an implementation, when controlling cache logic in the decoding according to the cache limit parameter, the processing unit 802 is specifically configured to: determine a cache limit point number threshold according to the cache limit parameter that limits a number of to-be-decoded points to be written to the cache; and read a third intermediate coefficient from the cache for decoding based on the number of to-be-decoded points written to the cache reaching the cache limit point number threshold.

In an implementation, when reading a third intermediate coefficient from the cache for decoding based on the number of to-be-decoded points written to the cache reaching the cache limit point number threshold, the processing unit 802 is specifically configured to: count a first total number of points of at least one point cloud group written to the cache for decoding, and based on a second number of point cloud groups being written to the cache and the first total number reaching the cache limit point number threshold, read a fourth intermediate coefficient of a fourth point of the at least one point cloud group from the cache for decoding; or count a third number of the at least one point cloud group written to the cache, calculate a fourth total number of points written to the cache based on the third number and a point number limit threshold of the at least one point cloud group, and based on the fourth total number reaching the cache limit point number threshold, read a fifth intermediate coefficient of a fifth point of the at least one point cloud group from the cache for decoding.

In an implementation, when reading a third intermediate coefficient from the cache for decoding based on the number of to-be-decoded points written to the cache reaching the cache limit point number threshold, the processing unit 802 is specifically configured to: determine, according to the cache limit parameter, a number of point cloud groups to be written to the cache; and based on a fifth number of point cloud groups written to the cache reaching the number of point cloud groups, read, from the cache for decoding, the third intermediate coefficient.

In an implementation, the processing unit 802 is further configured to: arrange, according to a preset arrangement manner, a second plurality of point cloud groups written to the cache, wherein the preset arrangement manner comprises a fixed arrangement manner or a dynamic arrangement manner, wherein a first arrangement manner of intermediate coefficients of the second plurality of point cloud groups is fixed based on the fixed arrangement manner, and wherein a second arrangement manner of intermediate coefficients of the second plurality of point cloud groups is not fixed based on the dynamic arrangement manner.

In an implementation, the preset arrangement manner corresponds to an index value; and the processing unit 802 is further configured to: parse to obtain an index value from the coded code stream, and determine an arrangement manner of the point cloud groups in the cache based on the index value.

In an implementation, the limit parameter includes a delay limit parameter; and when controlling the decoding process according to the limit parameter, the processing unit 802 is specifically configured to: control delay logic in the decoding according to the delay limit parameter.

In an implementation, the limit parameter includes a cache limit parameter and a delay limit parameter; and when controlling the decoding process according to the limit parameter, the processing unit 802 is specifically configured to: control decoding logic in the decoding according to the cache limit parameter and the delay limit parameter.

In an implementation, the limit parameter includes at least one of a cache limit parameter or a delay limit parameter; when the limit parameter includes only one type of parameter, the unit of the limit parameter includes any one or more of the following: a unit of a number of points and a unit of a number of groups; and when the limit parameter includes two types of parameters, the unit of the limit parameter includes any one or more of the following: a unit of a number of points, a unit of a number of groups, and a unit of a multiple relationship.

According to some embodiments, some of the operations involved in the point cloud processing method shown in FIG. 5 and FIG. 6 may be performed by various units in the point cloud processing apparatus shown in FIG. 8. For example, operation S501 and operation S502 shown in FIG. 5 can be executed by the obtaining unit 801 shown in FIG. 8, and operation S503 can be executed by the processing unit 802 shown in FIG. 8. Operation S601 and operation S602 shown in FIG. 6 can be executed by the obtaining unit 801 shown in FIG. 8, and operation S603 to operation S605 can be executed by the processing unit 802 shown in FIG. 8. The units of the point cloud processing apparatus shown in FIG. 8 may be separately or wholly combined into one or several other units, or one (or more) of the units herein may further be divided into multiple units of smaller functions. In this way, the same operations can be implemented, and implementation of the technical effects of some embodiments is not affected. The foregoing units are divided based on logical functions. In an actual application, a function of one unit may be implemented by multiple units, or functions of multiple units are implemented by one unit. In another embodiment of this disclosure, the point cloud processing apparatus may also include another unit. During practical application, these functions may also be cooperatively implemented by another unit and may be cooperatively implemented by multiple units.

According to another embodiment of this disclosure, a computer-readable instruction (including program code) that can perform operations of the corresponding method shown in FIG. 5 and FIG. 6 may be run on a general computing apparatus, for example, a computer, that includes a processing element and a storage element such as a central processing unit (CPU), a random access memory (RAM), and a read-only memory (ROM), to construct the point cloud processing apparatus shown in FIG. 8, and to implement the point cloud processing method according to some embodiments. The computer-readable instruction may be recorded in, for example, a computer-readable recording medium, and may be loaded into the foregoing computing apparatus by using the computer-readable recording medium, and run in the computing apparatus.

Based on the same inventive concept, the principles and beneficial effects of solving problems in the point cloud processing apparatus provided in some embodiments are similar to the principles and beneficial effects of solving problems in the point cloud processing method in the method embodiments of this disclosure. Refer to the principles and beneficial effects of implementation of the method and details will not be repeated herein for brevity of description.

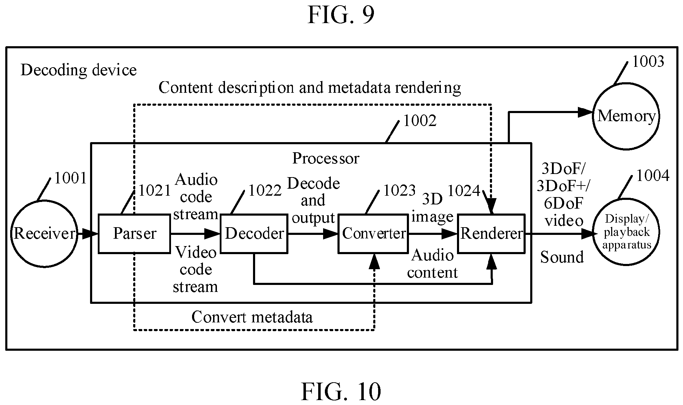

FIG. 9 is a schematic structural diagram of a coding device according to some embodiments. The coding device may be a computer device used by a provider of point cloud media, and the computer device may be a terminal (for example, a PC or a smart mobile device (for example, a smartphone)) or a server. As shown in FIG. 9, the coding device includes a capture device 901, a processor 902, a memory 903, and a transmitter 904.

The capture device 901 is configured to collect real-world sound-visual scenes to obtain original data of point cloud media (including audio content and video content that are synchronized in time and space). The capture device 901 may include but is not limited to: an audio device, a camera device, and a sensing device. The audio device may include an audio sensor, a microphone, and the like. The camera device can include an ordinary camera, a stereo camera, a light field camera, and the like. The sensing device may include a laser device, a radar device, and the like.

The processor 902 (or referred to as a central processing unit (CPU)) is the processing core of the coding device. The processor 902 is configured to implement one or more computer-readable instructions, and is specifically configured to load and execute one or more computer-readable instructions to implement the flow of the point cloud processing methods shown in FIG. 3 and FIG. 4.

The memory 903 is a memory device in the coding device and is configured to store computer-readable instructions and media resources. The memory 903 herein may include a built-in storage medium of the coding device, and certainly may also include an expanded storage medium supported by the coding device. The memory may be a high-speed RAM memory, or a non-volatile memory, for example, at least one magnetic disk storage. In an embodiment, the memory may further be at least one memory that is located far away from the foregoing processor. The memory provides a storage space for storing an operating system of the coding device. Moreover, the storage space is also configured to store computer-readable instructions. The computer-readable instructions include program instructions, and the program instructions are configured to be called and executed by the processor to execute each operation of the point cloud processing method. In addition, the memory 903 can also be configured to store point cloud media files formed after processing by the processor. The point cloud media files include media file resources and media presentation description information.

The transmitter 904 is configured to implement transmission interaction between the coding device and other devices, and is specifically configured to implement the transmission of point cloud media between the coding device and a content playback device. That is, the coding device transmits relevant media resources of the point cloud media to the content playback device through the transmitter 904.

Referring again to FIG. 9, the processor 902 may include a converter 921, a coder 922, and an encapsulator 923.

The converter 921 is configured to perform a series of conversion processing on captured video content, so that the video content becomes content suitable for video coding of point cloud media. The conversion processing may include: stitching and projection. In an embodiment, the conversion process further includes zone encapsulation. The converter 921 can convert captured 3D video content into a 2D image and provide the 2D image to the coder for video coding.

The coder 922 is configured to perform audio coding on the captured audio content to form an audio code stream of the point cloud media, and is further configured to perform video coding on the 2D image converted by the converter 921, to obtain a video code stream.

The encapsulator 923 is configured to encapsulate the audio code stream and the video code stream in a file container according to a file format (for example, ISOBMFF) of point cloud media, to form a media file resource of the point cloud media. The media file resource may be a media file or a media segment that forms a media file of point cloud media. According to a file format requirement of the point cloud media, media presentation description information is used to record metadata of the media file resources of the point cloud media. The encapsulated file of point cloud media processed by the encapsulator is saved in the memory and provided to the content playback device on demand for point cloud media presentation.

The processor 902 (specifically, each device included in the processor) executes each operation of the point cloud processing methods shown in FIG. 3 and FIG. 4 by calling one or more instructions in the memory. Specifically, the memory 903 stores one or more first instructions, and the one or more first instructions are loaded and executed by the processor 902 to implement the point cloud processing method provided in the foregoing embodiments.

Based on the same inventive concept, the principles and beneficial effects of solving problems by the coding device provided in some embodiments are similar to the principles and beneficial effects of solving problems by the point cloud processing method in the method embodiments of this disclosure. Refer to the principles and beneficial effects of the implementation of the method and details will not be repeated herein for brevity of description.

FIG. 10 is a schematic structural diagram of a decoding device according to some embodiments. The decoding device may be a computer device used by a user of point cloud media, and the computer device may be a terminal (for example, a PC or a smart mobile device (for example, a smartphone), or a VR device (for example, a VR helmet or VR glasses)). As shown in FIG. 10, the decoding device includes a receiver 1001, a processor 1002, a memory 1003, and a display/playback apparatus 1004.

The receiver 1001 is configured to implement transmission interaction between the decoding device and other devices, and is specifically configured to implement point cloud media transmission between a coding device and the decoding device. That is, the decoding device receives, through the receiver 1001, relevant media resources of the point cloud media transmitted by the coding device.

The processor 1002 (or referred to as a central processing unit (CPU)) is the processing core of the decoding device. The processor 1002 is configured to implement one or more computer-readable instructions, and is specifically configured to load and execute one or more computer-readable instructions to implement the flow of the point cloud processing methods shown in FIG. 5 and FIG. 6.

The memory 1003 is a memory device in the decoding device and is configured to store computer-readable instructions and media resources. The memory 1003 herein may include a built-in storage medium of the decoding device, and certainly may also include an expanded storage medium supported by the decoding device. The memory 1003 may be a high-speed RAM memory, or a non-volatile memory, for example, at least one magnetic disk storage. In an embodiment, the memory may further be at least one memory that is located far away from the foregoing processor. The memory 1003 provides a storage space for storing an operating system of the decoding device. Moreover, the storage space is also configured to store computer-readable instructions. The computer-readable instructions include computer-readable instructions, and the computer-readable instructions are configured to be called and executed by the processor to execute each operation of the point cloud processing method. In addition, the memory 1003 can also be configured to store a three-dimensional image of the point cloud media formed after processing by the processor, audio content corresponding to the three-dimensional image, information required for rendering the three-dimensional image and audio content, or the like. The display/playback apparatus 1004 is configured to output rendered sound and three-dimensional images.

Referring again to FIG. 10, the processor 1002 may include a parser 1021, a decoder 1022, a converter 1023, and a renderer 1024.

The parser 1021 is configured to decapsulate an encapsulated file of rendering media from the coding device, and specifically decapsulate media file resources according to a file format requirement of point cloud media to obtain an audio code stream and a video code stream; and provide the audio code stream and the video code stream to the decoder 1022.

The decoder 1022 performs audio decoding on the audio code stream, obtains audio content, and provides the audio content to the renderer for audio rendering. In addition, the decoder 1022 decodes the video code stream to obtain 2D images. According to metadata provided by media presentation description information, when the metadata indicates that the point cloud media has undergone a region encapsulation process, the 2D image is the encapsulated image. When the metadata indicates that the point cloud media has not undergone a region encapsulation process, the planar image is a projected image.

The converter 1023 is configured to convert 2D images into 3D images. When the point cloud media has undergone a region encapsulation process, the converter 1023 further first performs region decapsulation on the encapsulated image to obtain a projected image, and then reconstructs the projected image to obtain a 3D image. When the rendering media has not undergone a region encapsulation process, the converter 1023 directly reconstructs the projected image to obtain a 3D image.

The renderer 1024 is configured to render audio content and 3D images of point cloud media. Specifically, audio content and 3D images are rendered according to metadata related to rendering and windows in media presentation description information, and after the rendering is completed, are transferred to the display/playback apparatus for output.

In an exemplary embodiment, the processor 1002 (specifically, each device included in the processor) executes each operation of the point cloud processing methods shown in FIG. 5 and FIG. 6 by calling one or more instructions in the memory. Specifically, the memory stores one or more first instructions, and the one or more first instructions are configured to be loaded by the processor 1002 to execute the point cloud processing method described in the above embodiments.

Based on the same inventive concept, the principles and beneficial effects of solving problems by the decoding device provided in some embodiments are similar to the principles and beneficial effects of solving problems by the point cloud processing method in the method embodiments of this disclosure. Refer to the principles and beneficial effects of the implementation of the method and details will not be repeated herein for brevity of description.

Some embodiments further provides a computer-readable storage medium, the computer-readable storage medium stores one or more computer-readable instructions, and the one or more computer-readable instructions are configured to be loaded and executed by the processor to implement the point cloud processing method in the foregoing method embodiments.

Some embodiments further provides a computer program product including instructions, and the computer program product, when run on a computer, causes the computer to perform the point cloud processing method in the foregoing method embodiments.

Some embodiments further provides a computer program product. The computer program product includes computer-readable instructions, and the computer-readable instructions are stored in a computer-readable storage medium. The processor of the computer device reads the computer-readable instructions from the computer-readable storage medium, and the processor executes the computer instructions, so that the computer device executes the above point cloud processing method.

The operations of the methods of some embodiments may be reordered, combined, or deleted according to an actual requirement

The modules of the apparatuses of some embodiments may be combined, divided, or deleted according to an actual requirement.

A person of ordinary skill in the art may understand that all or some of the operations of the methods in the embodiments may be implemented by a computer-readable instruction instructing relevant hardware. The computer-readable instruction may be stored in a computer-readable storage medium. The readable storage medium may include: a flash drive, a read-only memory (ROM), a random access memory (RAM), a magnetic disk, or an optical disc.

The contents disclosed above are merely exemplary embodiments of this disclosure, but not intended to limit the scope of claim of this disclosure. A person of ordinary skill in the art can understand all or a part of the procedures for implementing the foregoing embodiments, and any equivalent variation made according to the claims of this disclosure shall still fall within the scope of this disclosure.

**Claims**

1. A point cloud processing method, executable by a computer device, comprising:

   setting a limit parameter of a point cloud, the limit parameter comprising at least one of a cache limit parameter or a delay limit parameter;
   obtaining attribute information of a first point of the point cloud;
   coding the attribute information of the first point; and
   controlling the coding according to the limit parameter.

2. The method according to claim 1, wherein the coding the attribute information of the first point is based on a coding scheme in unit of a number of points, comprising:

   converting the attribute information of the first point, to obtain a first intermediate coefficient of the first point;
   wherein the intermediate coefficient comprises a residual coefficient or a transform coefficient;
   writing the first intermediate coefficient to a cache; and
   reading the first intermediate coefficient from the cache for coding.

3. The method according to claim 1, wherein the coding the attribute information of the first point is based on a coding scheme in unit of a number of groups, comprising:

   grouping attribute information of a plurality of to-be-coded points, to obtain a first plurality of point cloud groups;
   converting attribute information of a second point of a point cloud group to be coded, to obtain a converted point cloud group;
   writing the converted point cloud group to a cache; and
   sequentially reading a second intermediate coefficient of the second point from the cache for coding, wherein the second intermediate coefficient comprises a residual coefficient or a transform coefficient.

4. The method according to claim 2 or 3, wherein the limit parameter comprises a cache limit parameter; and the controlling the coding according to the limit parameter comprises:
   controlling cache logic in the coding according to the cache limit parameter.

5. The method according to claim 4, wherein the controlling cache logic in the coding according to the cache limit parameter comprises:

   determining a cache limit point number threshold according to the cache limit parameter that limits a number of to-be-coded points to be written to the cache; and
   reading the second intermediate coefficient from the cache for coding based on the number of to-be-coded points written to the cache reaching the cache limit point number threshold.

6. The method according to claim 5, wherein the reading the second intermediate coefficient from the cache for coding based on the number of to-be-coded points written to the cache reaching the cache limit point number threshold comprises:

   counting a first total number of points of at least one point cloud group written to the cache for coding, and based on a second number of point cloud groups being written to the cache and the first total number reaching the cache limit point number threshold, reading a third intermediate coefficient of a third point of the at least one point cloud group from the cache for coding; or
   counting a third number of the at least one point cloud group written to the cache, calculating a fourth total number of points written to the cache based on the third number and a point number limit threshold of the at least one point cloud group, and based on the fourth total number reaching the cache limit point number threshold, reading a fourth intermediate coefficient of a fourth point of the at least one point cloud group from the cache for coding.

7. The method according to claim 4, wherein the controlling cache logic in the coding according to the cache limit parameter comprises:

determining, according to the cache limit parameter, a number of point cloud groups to be written to the cache; and
based on a fifth number of point cloud groups written to the cache reaching the number of point cloud groups, reading, from the cache for coding, the second intermediate coefficient.

8. The method according to claim 7, wherein the method further comprises:

arranging, according to a preset arrangement manner, a second plurality of point cloud groups written to the cache,
wherein the preset arrangement manner comprises a fixed arrangement manner or a dynamic arrangement manner,
wherein a first arrangement manner of intermediate coefficients of the second plurality of point cloud groups is fixed based on the fixed arrangement manner, and
wherein a second arrangement manner of intermediate coefficients of the second plurality of point cloud groups is not fixed based on the dynamic arrangement manner.

9. The method according to claim 8, wherein the preset arrangement manner corresponds to an index value; and the method further comprises:
writing a first index value corresponding to the preset arrangement manner in a coded code stream formed by the coding.

10. The method according to claim 4, wherein the coding comprises run-length coding; and the controlling cache logic in the coding according to the cache limit parameter comprises:

determining, according to the cache limit parameter, a cache limit point number threshold limiting a number of to-be-coded points to be written to the cache;
setting, during the run-length coding, a first run-length used to count consecutive first type of symbols;
setting the first run-length to an initial value; and
sequentially reading a plurality of intermediate coefficients of a plurality of to-be-coded points from the cache, wherein:

based on a fifth intermediate coefficient whose value is a first type of symbol being read,

increasing a count value of the first run-length by one step;
based on a first number of to-be-coded points that are read being equal to the cache limit point number threshold,

coding a current run-length, or
coding the cache limit point number threshold and a sixth intermediate coefficient of a sixth to-be-coded point whose value is the first type of symbol, and setting the first run-length to the initial value for recount; and

based on a seventh intermediate coefficient of a seventh to-be-coded point whose value is a second type of symbol being read,

coding the current run-length and the seventh intermediate coefficient of the second type of symbol, and resetting the first run-length to the initial value for recount.

11. The method according to claim 2 or 3, wherein the limit parameter comprises a delay limit parameter; and the controlling a coding according to the limit parameter comprises:
controlling delay logic in the coding according to the delay limit parameter.

12. The method according to claim 11, wherein the coding comprises run-length coding; and the controlling delay logic in the coding according to the delay limit parameter comprises:

determining, according to the delay limit parameter, a delay limit point number threshold limiting a number of to-be-coded points that are allowed to be delayed during coding;
setting, during the run-length coding, a second run-length used to count consecutive third type of symbols;
setting the second run-length to an initial value; and
sequentially reading a plurality of intermediate coefficients of a plurality of to-be-coded points from the cache, wherein:

> based on an eighth intermediate coefficient whose value is a third type of symbol being read,

>> increasing a count value of the second run-length by one step;
>> based on the count value of the second run-length being equal to the delay limit point number threshold,

>>> performing parameter coding processing, and
>>> setting the second run-length to the initial value for recount;

> based on a ninth intermediate coefficient of a eighth to-be-coded point whose value is a second type of symbol being read,

>> coding the current run-length and the ninth intermediate coefficient of the second type of symbol, and
>> resetting the second run-length to the initial value for recount;

> wherein the parameter coding processing refers to:

>> coding the current run-length; or
>> coding a limit identifier, wherein the limit identifier is configured for setting a run-length to a preset value; or
>> coding the delay limit point number threshold and the eighth intermediate coefficient.

13. The method according to claim 11, wherein the coding comprises run-length coding; and the controlling delay logic in the coding according to the delay limit parameter comprises:

> determining, according to the delay limit parameter, a delay limit point number threshold limiting a number of to-be-coded points that are allowed to be delayed during coding;
> setting, during the run-length coding, a second run-length used to count consecutive third type of symbols;
> setting the second run-length to an initial value; and
> sequentially reading a plurality of intermediate coefficients of a plurality of to-be-coded points from the cache, wherein:

>> based on an eighth intermediate coefficient whose value is a third type of symbol being read,

>>> increasing a count value of the second run-length by one step;
>>> based on the count value of the second run-length being equal to the delay limit point number threshold,

>>>> coding the current run-length, or coding the delay limit point number threshold and the eighth intermediate coefficient, and
>>>> setting the second run-length to the initial value for recount;

>> based on a ninth intermediate coefficient of a eighth to-be-coded point whose value is a second type of symbol being read,

>>> coding the current run-length and the ninth intermediate coefficient of the second type of symbol, and
>>> resetting the second run-length to the initial value for recount.

14. The method according to claim 11, wherein the delay limit parameter is configured for determining the delay limit point number threshold; the coding comprises run-length coding, and a run-length in the run-length coding is less than or equal to the delay limit point number threshold; and the method further comprises:
setting a number of bits of the run-length according to the delay limit point number threshold.

15. The method according to claim 2 or 3, wherein the limit parameter comprises a cache limit parameter and a delay limit parameter; and the controlling the coding according to the limit parameter comprises:

controlling coding logic in the coding according to the cache limit parameter and the delay limit parameter.

16. The method according to claim 1, wherein the setting a limit parameter of a point cloud comprises any one or more of the following:

setting the limit parameter to a default value;
setting the limit parameter to a fixed value, and encapsulating the set limit parameter into a coded code stream obtained by the coding;
setting the limit parameter to a variable value, and encapsulating the set limit parameter into the coded code stream; and
dynamically adjusting the value of the limit parameter during the coding, and encapsulating the dynamically adjusted limit parameter into the coded code stream.

17. The method according to claim 1, wherein when the limit parameter comprises only one type of parameter, a unit of the limit parameter comprises any one of the following: a unit of a number of points and a unit of a number of groups; and when the limit parameter comprises two types of parameters, the unit of the limit parameter comprises any one or more of the following: unit of a number of points, unit of a number of groups, and unit of a multiple relationship.

18. The method according to claim 17, wherein the limit parameter is configured for determining a coding limit point number threshold;

when the limit parameter is a cache limit parameter, the coding limit point number threshold is a cache limit point number threshold; and
when the limit parameter is a delay limit parameter, the coding limit point number threshold is a delay limit point number threshold;
when the limit parameter is in unit of a number of points and the value of the limit parameter is X1, the coding limit point number threshold is a total number of intermediate coefficients of X1 to-be-coded points;
when the limit parameter is in unit of a number of groups and the value of the limit parameter is X2, the coding limit point number threshold is a total number of intermediate coefficients of to-be-coded points in X2 point cloud groups; and
when the limit parameter is in unit of a number of groups, the value of the limit parameter is X3, and a number of points in each point cloud group is limited to X4, the coding limit point number threshold is a total number of intermediate coefficients of to-be-coded points in X3 point cloud groups, wherein the total number does not exceed the value of X3 *X4.

19. The method according to claim 17, wherein the limit parameter comprises two types of parameters: a cache limit parameter and a delay limit parameter; the cache limit parameter is configured for determining a cache limit point number threshold; and the delay limit parameter is configured for determining a delay limit point number threshold;

when the cache limit parameter is in unit of a multiple relationship and the value of the cache limit parameter is Y1, the cache limit point number threshold is Y1 times the delay limit point number threshold; and
when the delay limit parameter is in unit of a multiple relationship and the value of the delay limit parameter is Y2, the delay limit point number threshold is Y2 times the cache limit point number threshold.

20. A point cloud processing method, performed by a computer device, comprising:

obtaining a coded code stream of a first point of a point cloud;
obtaining a limit parameter of a point cloud, the limit parameter comprising at least one of a cache limit parameter or a delay limit parameter;
decoding the coded code stream of the first point; and
controlling the decoding according to the limit parameter.

21. The method according to claim 20, wherein the obtaining a limit parameter of a point cloud comprises any one or more of the following:

setting the limit parameter to a default value;
parsing, from the coded code stream, to obtain the limit parameter that has been set to a fixed value;
parsing, from the coded code stream, to obtain the limit parameter that has been set to a variable value; and

parsing, from the coded code stream, to obtain a dynamically adjusted limit parameter that has been set.

22. The method according to claim 20, wherein the decoding the coded code stream of the first point is based on a decoding scheme in unit of a number of points, comprising:

  parsing the coded code stream of the first point to obtain a first intermediate coefficient of the first point; wherein the intermediate coefficient comprises a residual coefficient or a transform coefficient;
  writing the first intermediate coefficient to a cache; and
  reading the first intermediate coefficient from the cache for decoding.

23. The method according to claim 20, wherein the decoding the coded code stream of the first point is based on a decoding scheme in unit of a number of groups, comprising:

  parsing the coded code stream of a plurality of to-be-decoded points, to obtain a first plurality of point cloud groups;
  writing a point cloud group to the cache; and
  sequentially reading a second intermediate coefficient of a second point in the point cloud group from the cache for decoding, wherein the second intermediate coefficient comprises a residual coefficient or a transform coefficient.

24. The method according to claim 20, wherein the decoding comprises run-length decoding; and the controlling the decoding according to the limit parameter comprises:

  determining a limit point number threshold according to the limit parameter, wherein the limit point number threshold is used to limit a number of to-be-decoded points;
  when a limit flag bit is read during the run-length decoding, setting a count value of a first run-length to a preset value;
  when the count value of the first run-length is greater than zero and not equal to the limit point number threshold, setting an intermediate coefficient of a current to-be-decoded point to a first value, and reducing the count value of the first run-length by one step, until the count value of the first run-length is equal to zero; and
  obtaining a third intermediate coefficient of a third point that is read when the count value of the first run-length is equal to zero, and decoding the third intermediate coefficient.

25. The method according to claim 20, wherein the decoding comprises run-length decoding; and the controlling a decoding process according to the limit parameter comprises:

  determining a limit point number threshold according to the limit parameter, wherein the limit point number threshold is used to limit a number of to-be-decoded points;
  reading a count value of a first run-length from the coded code stream during the run-length decoding;
  when the count value of the first run-length is greater than zero and equal to the limit point number threshold, setting an intermediate coefficient of a current to-be-decoded point to a first value, and reducing the count value of the first run-length by one step, until the count value of the first run-length is equal to zero;
  reading a count value of a second run-length from the coded code stream; and when the count value of the second run-length is greater than zero and not equal to the limit point number threshold, setting an intermediate coefficient of a current to-be-decoded point to a second value, and reducing the count value of the second run-length by one step, until the count value of the second run-length is equal to zero; and
  obtaining a third intermediate coefficient of a third point that is read when the count value of the second run-length is equal to zero, and decoding the third intermediate coefficient.

26. The method according to claim 20, wherein the decoding comprises run-length decoding; and the controlling a decoding process according to the limit parameter comprises:

  reading a count value of a first run-length from the coded code stream during the run-length decoding;
  when the count value of the first run-length is greater than zero, setting an intermediate coefficient of a current to-be-decoded point to a first value, and reducing the count value of the first run-length by one step, until the count value of the first run-length is equal to zero; and
  obtaining a third intermediate coefficient of a third point that is read when the count value of the first run-length is equal to zero, and decoding the third intermediate coefficient.

27. The method according to claim 22 or 23, wherein the limit parameter comprises a cache limit parameter; and the controlling the decoding according to the limit parameter comprises:
controlling cache logic in the decoding according to the cache limit parameter.

28. The method according to claim 27, wherein the controlling cache logic in the decoding according to the cache limit parameter comprises:

   determining a cache limit point number threshold according to the cache limit parameter that limits a number of to-be-decoded points to be written to the cache; and
   reading a third intermediate coefficient from the cache for decoding based on the number of to-be-decoded points written to the cache reaching the cache limit point number threshold.

29. The method according to claim 28, wherein the reading a third intermediate coefficient from the cache for decoding based on the number of to-be-decoded points written to the cache reaching the cache limit point number threshold comprises:

   counting a first total number of points of at least one point cloud group written to the cache for decoding, and based on a second number of point cloud groups being written to the cache and the first total number reaching the cache limit point number threshold, reading a fourth intermediate coefficient of a fourth point of the at least one point cloud group from the cache for decoding; or
   counting a third number of the at least one point cloud group written to the cache, calculating a fourth total number of points written to the cache based on the third number and a point number limit threshold of the at least one point cloud group, and based on the fourth total number reaching the cache limit point number threshold, reading a fifth intermediate coefficient of a fifth point of the at least one point cloud group from the cache for decoding.

30. The method according to claim 27, wherein the reading a third intermediate coefficient from the cache for decoding based on the number of to-be-decoded points written to the cache reaching the cache limit point number threshold comprises:

   determining, according to the cache limit parameter, a number of point cloud groups to be written to the cache; and
   based on a fifth number of point cloud groups written to the cache reaching the number of point cloud groups, reading, from the cache for decoding, the third intermediate coefficient.

31. The method according to claim 30, wherein the method further comprises:

   arranging, according to a preset arrangement manner, a second plurality of point cloud groups written to the cache,
   wherein the preset arrangement manner comprises a fixed arrangement manner or a dynamic arrangement manner,
   wherein a first arrangement manner of intermediate coefficients of the second plurality of point cloud groups is fixed based on the fixed arrangement manner, and
   wherein a second arrangement manner of intermediate coefficients of the second plurality of point cloud groups is not fixed based on the dynamic arrangement manner.

32. The method according to claim 31, wherein the preset arrangement manner corresponds to an index value; and the method further comprises:
parsing to obtain an index value from the coded code stream, and determining an arrangement manner of the point cloud groups in the cache based on the index value.

33. The method according to claim 22 or 23, wherein the limit parameter comprises a delay limit parameter; and the controlling the decoding according to the limit parameter comprises:
controlling delay logic in the decoding according to the delay limit parameter.

34. The method according to claim 22 or 23, wherein the limit parameter comprises a cache limit parameter and a delay limit parameter; and the controlling the decoding according to the limit parameter comprises:
controlling decoding logic in the decoding according to the cache limit parameter and the delay limit parameter.

35. The method according to claim 20, wherein the limit parameter comprises at least one of the cache limit parameter or the delay limit parameter;

when the limit parameter comprises only one type of parameter, the unit of the limit parameter comprises any one or more of the following: a unit of a number of points and a unit of a number of groups; and
when the limit parameter comprises two types of parameters, the unit of the limit parameter comprises any one or more of the following: unit of a number of points, unit of a number of groups, and unit of a multiple relationship.

36. A point cloud processing apparatus, comprising:

a setting unit, configured to set a limit parameter of a point cloud, the limit parameter comprising at least one of a cache limit parameter or a delay limit parameter;
an obtaining unit, configured to obtain attribute information of a first point of the point cloud; and
a processing unit, configured to code the attribute information of the first point; and control the coding according to the limit parameter.

37. A point cloud processing apparatus, comprising:

an obtaining unit, configured to obtain a coded code stream of a first point of a point cloud, and obtain a limit parameter of the point cloud, the limit parameter comprising at least one of a cache limit parameter or a delay limit parameter; and
a processing unit, configured to decode the coded code stream of the first point; and control the decoding according to the limit parameter.

38. A computer device, comprising:

a processor, configured to implement computer-readable instructions; and
a computer-readable storage medium, storing computer-readable instructions, the computer-readable instructions being loaded by the processor to perform the point cloud processing method according to any one of claims 1 to 19, or the point cloud processing method according to any one of claims 20 to 35.

39. A computer-readable storage medium, storing computer-readable instructions, the computer-readable instructions being loaded by a processor to perform the point cloud processing method according to any one of claims 1 to 19, or the point cloud processing method according to any one of claims 20 to 35.

40. A computer program product, comprising computer-readable instructions, the computer-readable instructions being loaded by a processor to perform operations of the point cloud processing method according to any one of claims 1 to 19, or operations of the point cloud processing method according to any one of claims 20 to 35.

Geometry information                           Attribute information

| Coordinate transformation | | Color transformation |

| Voxelization | | Attribute transformation |

| Octree analysis |

| Curved surface approximation analysis |

Geometry reconstruction

| Area adaptive hierarchical transformation | | Hierarchical |

| transformation |

| Quantize |

| Entropy coding | | Entropy coding |

Geometry bit stream                            Attribute bit stream

FIG. 1a

FIG. 1b

FIG. 2

Set a limit parameter of a point cloud, the limit parameter including
at least one of a cache limit parameter or a delay limit parameter — S301

Obtain attribute information of a first point of the point cloud — S302

Code the attribute information of the first point, and control the
coding according to the limit parameter — S303

FIG. 3

Set a limit parameter of a point cloud — S401

Obtain attribute information of a first point of the point
cloud — S402

| Code the attribute information of the first point, and control cache logic in the coding according to the cache limit parameter — S403 | Code the attribute information of the first point, and control delay logic in the coding according to the delay limit parameter — S404 | Code the attribute information of the first point, and control coding logic in the coding according to the cache limit parameter and the delay limit parameter — S405 |

FIG. 4

Obtain a coded code stream of a first point of the point cloud ⌐S501

Obtain a limit parameter of a point cloud, the limit parameter including at least one of a cache limit parameter or a delay limit parameter ⌐S502

Decode the coded code stream of the first point, and control the decoding according to the limit parameter ⌐S503

## FIG. 5

Obtain a coded code stream of a first point of the point cloud ⌐S601

Obtain a limit parameter of the point cloud ⌐S602

| Decode the attribute information of the first point, and control cache logic in the decoding according to the cache limit parameter ⌐S603 | Decode the attribute information of the first point, and control delay logic in the decoding according to the delay limit parameter ⌐S604 | Decode the attribute information of the first point, and control decoding logic in the decoding according to the cache limit parameter and the delay limit parameter ⌐S605 |

## FIG. 6

701 Setting unit

702 Obtaining unit

703 Processing unit

Point cloud processing apparatus

FIG. 7

801 Obtaining unit

802 Processing unit

Point cloud processing apparatus

FIG. 8

Coding device

Video content

902 Processor

904 Transmitter

901 Capture device

921 Converter

2D image

922 Coder

923 Encapsulator

903 Media file resource

Memory

Video content

Audio and video code stream

Media presentation description information

Metadata

FIG. 9

FIG. 10

| INTERNATIONAL SEARCH REPORT | International application No. |
|---|---|
| | **PCT/CN2022/137750** |

**A.    CLASSIFICATION OF SUBJECT MATTER**

H04N19/597(2014.01)i

According to International Patent Classification (IPC) or to both national classification and IPC

**B.    FIELDS SEARCHED**

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNABS, CNTXT, CNKI, EPTXT, VEN, USTXT, WOTXT: 编码, 解码, 属性, 参数, 残差, 点云, 系数, 缓存, 控制, 限制, 延迟, 阈值, code, decode, attribute, parameter, residual, point cloud, coefficient, cache, memory, control, limit, delay, threshold

**C.    DOCUMENTS CONSIDERED TO BE RELEVANT**

| Category* | Citation of document, with indication, where appropriate, of the relevant passages | Relevant to claim No. |
|---|---|---|
| A | US 2021407144 A1 (QUALCOMM INC.) 30 December 2021 (2021-12-30)<br>entire document | 1-40 |
| A | US 2021006837 A1 (TENCENT AMERICA LLC) 07 January 2021 (2021-01-07)<br>entire document | 1-40 |
| A | WO 2022019713 A1 (LG ELECTRONICS INC.) 27 January 2022 (2022-01-27)<br>entire document | 1-40 |
| A | WO 2022062369 A1 (OPPO GUANGDONG MOBILE TELECOMMUNICATIONS CO.,<br>LTD.) 31 March 2022 (2022-03-31)<br>entire document | 1-40 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **20 February 2023** | **21 February 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/137750**

| Patent document cited in search report | | | Publication date (day/month/year) | Patent family member(s) | | | Publication date (day/month/year) |
|---|---|---|---|---|---|---|---|
| US | 2021407144 | A1 | 30 December 2021 | AU | 2021296460 | A1 | 08 December 2022 |
| | | | | WO | 2021262936 | A1 | 30 December 2021 |
| | | | | CA | 3180956 | A1 | 30 December 2021 |
| | | | | BR | 112022025630 | A2 | 17 January 2023 |
| | | | | TW | 202205863 | A | 01 February 2022 |
| US | 2021006837 | A1 | 07 January 2021 | None | | | |
| WO | 2022019713 | A1 | 27 January 2022 | None | | | |
| WO | 2022062369 | A1 | 31 March 2022 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022104882918